# EUROPEAN PATENT APPLICATION

(11) **EP 4 603 181 A1**
(43) Date of publication of application: **20.08.2025**
(21) Application number: 25157675.7
(22) Date of filing: 13.02.2025
(51) Int. Cl.: B01J 21/06, B01J 23/46, B01J 23/56, B01J 35/33, C25B 1/04, C25B 11/081, B01J 21/18, B01J 27/24, B01J 35/45, B01J 35/70, C25B 11/054, C25B 11/065, C25B 11/067, C25B 11/069

(54) **RU NANOPARTICLES SUPPORTED ON TITANIUM OXYNITRIDE AS EFFICIENT CATALYSTS FOR ALKALINE HYDROGEN EVOLUTION REACTION**

(30) Priority: 14.02.2024 LU 506394; 25.09.2024 LU 508364
(71) Applicant: Kemijski Institut, 1000 Ljubljana (SI)
(72) Inventor: SMILJANIC, Milutin, 1000 Ljubljana (SI); HODNIK, Nejc, 1000 Ljubljana (SI); BELE, Marian, 1000 Ljubljana (SI)
(74) Representative: Weickmann & Weickmann PartmbB

(57) **Abstract**

The invention provides a novel and efficient catalyst for HER composed of Ru nanoparticles dispersed over a support consisting of titanium oxynitride and high surface area carbon material, such as graphene oxide, (TiON-C) with a particularly low Ru loading of only 6 wt.%. In an alkaline electrolyte, the Ru/TiON-C composite significantly surpasses the HER performance of the Ru/C analog. More importantly, Ru/TiON-C is both intrinsically (nearly 3 times higher turnover frequency) and practically (4 times higher mass activity) better performing HER catalyst than the commercial Pt/C benchmark.

## Description

### ABSTRACT

The invention presents a novel and efficient catalyst for hydrogen evolution reaction (HER) composed of Ru nanoparticles dispersed over a support consisting of titanium oxynitride and high specific surface area carbon (TiON-C) with a particularly low Ru loading of only 6 wt.%.

### INTRODUCTION

The increasing use of fossil fuels and consequent emissions present a serious threat to our environment, climate, and health. Hydrogen emerges as a promising alternative to fossils as the primary energy carrier due to its high energy density and complete environmental friendliness.¹⁻³ Carbon-free hydrogen production can be realized by water electrolysis,^{4,5} an electrochemical technology in which hydrogen is generated via hydrogen evolution reaction (HER) at the cathode side, while the counter-process of oxygen evolution enrolls at the anode. Therefore, developing active and durable electrocatalysts for HER is an important and challenging task.

HER begins with the adsorption of a proton, resulting in an adsorbed H atom on the electrode surface (Volmer step, H⁺ + e⁻ → H*). In the following, a hydrogen molecule is formed by recombining two adjacent adsorbed H-atoms (Tafel step, H* + H* → H₂) or via electrochemical desorption (Heyrovsky step, H* + H⁺ + e⁻ → H₂).⁶ According to the Sabatier's principle, the optimum HER catalysts should bind H-intermediates neither too strongly nor too weakly.⁷ In that sense, Gibbs energy for dissociative adsorption of hydrogen can be used as a descriptor of the HER activity, which can be elegantly visualized in the form of *Volcano plots* when experimentally measured exchange current densities are correlated with DFT calculated hydrogen standard adsorption Gibbs energy (Δ*G*_{H*}) values.⁸⁻¹⁰ Pt sits near the top of the Volcano curve thanks to close-to-optimal hydrogen standard adsorption Gibbs energy, which makes Pt a nearly perfect HER catalyst with almost zero overpotential and facile reactions kinetics¹¹. It is thus very daunting to surpass the activity of Pt just by designing Pt-free materials with superior Δ*G*_{H*} values. However, in alkaline media, the sources of protons are water molecules, which means that HER kinetics is affected by an additional step of water dissociation (which does not exist in acid media) described by the energy barrier for water dissociation (*E*^{act}). It was shown that the kinetics of HER on Pt is a few orders of magnitude slower in alkaline than in acid electrolytes due to the sluggish water dissociation, which opens a range of opportunities for tailoring efficient Pt-free catalysts for alkaline HER by manipulating both Δ*G*_{H*} and *E*^{act} parameters. The high cost of Pt is an important disadvantage which can be addressed by replacing it with other less expensive metals.

Ruthenium appears to be a good candidate to replace Pt as it combines a similar bond strength with hydrogen as Pt and on the other hand superior water dissociation properties.^{6,12} Moreover, Ru is significantly cheaper than Pt as the average Ru price over the last decade is around 20% of the Pt price. Significant attention in the literature is devoted to various strategies to improve the activity of Ru and approach or surpass Pt benchmarks, which resulted in several review articles.^{6,12-14} For instance, alloying Ru with abundant transition metals has been shown to effectively increase its activity for HER, while at the same time reducing the loading of Ru in the catalyst. Alloying Ru with Cu was found to be beneficial for HER activity in an alkaline and neutral media due to the ligand effect which led to the electronic rearrangements between Cu and Ru and modulated Ru-H* bonding and water adsorption/activation properties.¹⁵ Similar effects for HER (and other energy conversion reactions) were also reported upon alloying Ru with Co, Ni, or Fe.¹⁶ The enhancement was ascribed to the electronic interaction between Ru and the guest metal, which weakened the strong adsorption of H onto Ru active sites. Similar improvements in H adsorption/desorption and water activation properties can be achieved by non-metal doping, such as reported for phosphorous¹⁷ or boron.¹⁸ Another effective strategy to increase the activity of Ru is to induce the growth of the metastable fcc-structured Ru nanoparticles instead of the thermodynamically favored hcp ones. Supporting Ru nanoparticles on graphitic carbon nitride complex with carbon (Ru/C₃N₄/C) leads to a mixture of Ru fcc monophase, intergrown hcp/fcc phase, and hcp monophase, in contrast to typical Ru/C sample, which shows only the hcp-structured Ru nanoparticles. ¹⁹ HER performance of Ru/C₃N₄/C catalyst in alkaline media was significantly improved with respect to Ru/C and surpassed the activity of the Pt/C benchmark, which was ascribed to the reduced water dissociation barrier on anomalous Ru-fcc structures. Similarly, high alkaline HER activities were reported for fcc Ru nanodendrites²⁰ and for fcc Ru nanorods grown epitaxially on Au nanowires.²¹ Other approaches include downsizing Ru nanoparticles to 2-3 nm (a few hundred atoms) to increase the number of unsaturated atoms and defects^{22,23} or preparing Ru single atoms on suitable supports, which are able to prevent their agglomeration.^{24,25}

In addition to metallic nanoparticles as active compounds, support materials are another essential part of electrocatalytic composites, as they should provide high electrical conductivity, high surface area, and (electro)chemical stability. Some support materials can also affect the overall performance of active sites via metal-support interaction (MSI), which leads to the charge redistribution between support and metal nanoparticles. In the case of HER, MSI can be used to tune the Δ*G*_{H*} and *E*^{act} values of active sites. Recently, a nitrogen-doped titanium oxide, also referred to as titanium oxynitride (TiON), has been introduced as an advanced support for application in water splitting.²⁶ In the following studies, TiON was mixed with different carbon materials to improve its dispersion and increase the surface area.²⁷ These composites were initially tested as support for Ir nanoparticles for oxygen evolution reaction and significant performance enhancement was linked with MSI. ²⁶⁻²⁹ More recently, HER on Pt nanoparticles supported by TiON embedded in reduced graphene oxide nanoribbons (TiON-C) was studied.³⁰ Pt/TiON-C composite exhibited improved intrinsic HER activity and stability with respect to the commercial Pt/C due to the MSI effect. DFT calculations suggested that the increased activity originated from better-tuned hydrogen adsorption-free energy on Pt supported on TiON with respect to Pt supported on carbon. At the same time, the stability of supported Pt was enhanced with stronger anchoring of Pt nanoparticles on TiON, as another benefit of MSI. It should be emphasized that Pt nanoparticles (as well as Ir²⁷) were almost exclusively deposited on TiON and not on the carbon template, which is vital for building advanced catalysts based on MSI.

### SUMMARY OF THE INVENTION

The present invention involves a new electrocatalytic composite for HER based on ruthenium (Ru) nanoparticles supported on a titanium oxynitride (TiON) composite and with or without a high specific surface area carbon material, in particular graphene, with very low metal content.

Further aspects of the invention relate to the production of the Ru/TiON/carbon composite involving the synthesis of graphene oxide (modified Hummers method) and the overlay of graphene oxide with TiO₂ (via hydrolysis of Ti-isopropoxide). Instead of graphene, other high surface area carbon materials (e.g. Vulcan Carbon, Ketjen Black), with a specific surface area between 250 and 1500 m²/g can be used as well.⁴⁹ The Ru precursor is then added to the resulting mixture. The resulting mixture is then thermally treated in a controlled atmosphere of ammonia at high temperature.

The Ru/TiON catalyst allows a more efficient operation of HER in alkaline electrolytes compared to the Pt/C catalyst. In particular, the potential required for HER operation at a current density of 10 mA/cm² is 45 mV for Pt/C and 42 mV for Ru/TiON, while Ru/TiON offers almost 4 times higher mass activity than Pt/C (5440 A/gRu compared to 1430 A/gPt at 100 mV overvoltage). In addition, the advantage of using Ru instead of Pt is in its cost - currently Ru is more than twice as cheap as Pt (https://matthey.com/products-and-markets/pgms-and-circularity/pgm-management).

The improved performance of the Ru/TiON catalyst comes from a carefully designed material where each component has a specific role to play. The reduced graphene oxide provides a highly specific surface area for the TiON film, on which Ru nanoparticles are then deposited as active sites for the hydrogen evolution reaction; their activity is enhanced through metal-support interactions (MSI) between Ru and TiON, which emphasizes the impact of the otherwise inactive TiON support.

### DESCRIPTION OF THE INVENTION

In the present invention, HER is investigated on an electrocatalytic composite consisting of Ru nanoparticles supported on TiON dispersed over reduced graphene oxide or other high specific surface area carbon (HSSAC) materials (further denoted as Ru/TiON-C) with low Ru loading of only 6 wt.%. According to the invention, the term "high specific surface area carbon" refers to carbon materials with a specific surface area of at least 250 m²/g, preferably up to 1500 m²/g. Characterization of Ru/TiON-C catalyst and investigation of possible MSI was performed using X-ray diffraction (XRD), scanning transmission electron microscopy (STEM), and X-ray photoelectron spectroscopy (XPS). In addition to the common Ru-hcp structure, the presence of unexpected Ru-fcc structures was observed in the Ru/TiON-C composite, which points out the effect of the TiON support on the growth of Ru nanoparticles. XPS analysis indicated the presence of MSI between Ru and TiON through the shift of the characteristic Ru photoelectron lines. Electrocatalytic HER tests conducted in an alkaline electrolyte revealed that the Ru/TiON-C composite is significantly more active than the Ru/C analog, while more importantly, it also surpassed the activity of the Pt/C benchmark.

Thus, the first aspect of the invention relates to a catalyst for hydrogen evolution, comprising Ru nanoparticles supported on titanium oxynitride (TiON).

In preferred embodiments, the TiON is dispersed over reduced graphene oxide (or other HSSAC materials). HSSAC material has a high specific surface area of at least 250m²/g. A high specific surface area in a range of 250-1500 m²/g is particularly preferred. The specific surface area can be determined by BET testing (Brunauer, Emmett and Teller). Ru/TiON-C is both intrinsically (nearly 3 times higher turnover frequency) and practically (4 times higher mass activity) better performing HER catalyst than the commercial Pt/C benchmark.

The amount of Ru loading required to achieve the desired catalytic activity is rather low. It should be at least 3 wt.%. At lower loadings, the measured activity may be insufficient, as the number of available Ru active sites is low. These Ru/TiON active sites provide excellent activity for alkaline HER, which exceeds the activity of Pt/C with significantly higher metal loading (otherwise known as the most active metal for HER). The Ru loading in the material can be further increased up to 50% or less, preferably in a range of 3 to 20 wt.%, more preferably 5 to 10 wt.%, in particular 6 wt. % or less, based on the total weight of the catalyst. Higher amounts of Ru loading will provide higher HER activity in alkaline media, but at some point, the effect will saturate, and this comes with a trade-off between price and performance (i.e. lowering mass activity while increasing the cost of the material).

The particle size of the supported Ru nanoparticles is 50 nm or less, preferably in a range of 1-10 nm, more preferably 5-10 nm. In particular, the average particle diameter can be about 7-8 nm. Particle size can be determined by transmission electron microscopy (TEM). The diameter and diameter distribution can be determined from TEM images using the related software.

Origins of the high HER activity of the catalyst of the invention are associated with the dual effect of the TiON support on the active Ru sites. The detailed analysis of the high-resolution transmission electron microscopy imaging of Ru/TiON-C material revealed that in addition to the usual Ru-hcp structure, TiON enabled the growth of an unexpected Ru-fcc structure, which is known to improve HER activity. At the same time, MSI between TiON and Ru was evidenced by X-ray photoelectron spectroscopy, which can also increase HER activity of Ru-sites. According to the invention, the supported Ru nanoparticles display an hcp structure and/or a distorted cubic (fcc) structure. Surprisingly, there are Ru nanoparticles that display an fcc structure in combination with hcp on the same particle.

In a preferred embodiment of the invention, the above-disclosed catalyst is further decorated with Ir or Pt. Additional metals are preferably not present. In particular, the catalyst of the invention is free of copper. Such composites, wherein in addition to Ru nanoparticles also Ir or Pt are supported on TiON, demonstrate a superior performance for electrochemical hydrogen evolution reaction both in acidic media and in alkaline media. This finding can be explained by Ir and Pt forming a shell over Ru core nanoparticles, so that a core-shell nanoparticle is obtained which results in a unique active site. Other metals, and copper in particular, can interfere with the formation of such core-shell nanoparticles and are thus preferably avoided. These Ru/Pt/Ir-containing catalysts exhibit an even higher mass activity than catalysts with only Ru nanoparticles supported on TiON. They combine the benefits of bimetallic Ru/Ir and Ru/Pt active sites and MSI induced by TiON. The combination of alloying and MSI induced by TiON cumulatively tune HER activity descriptors, namely adsorption energetics of H-intermediates and water dissociation barrier. Further, the composite catalysts show excellent durability and provide stable HER operation over time.

In a particularly preferred aspect of this embodiment, the TiON is dispersed over reduced graphene oxide as described above.

The particle size does not change significantly when the Ru nanoparticles are loaded with Ir or Pt. It is preferably in the range of 1-10 nm, more preferably 5-10 nm, as determined using TEM. In particular, the average diameter can be about 7-8 nm. The total mass loading of Ir and/or Pt is preferably in a range of 0.5 to 30 wt.%, more preferably 1 to 10 wt.%, based on the total weight of the catalyst. For Ir, a mass loading in a range of 1 to 10 wt.% or 5 to 10 wt.% is particularly preferred. For Pt, a mass loading in a range of 1 to 5 wt.% or 1 to 3 wt.% is particularly preferred. The mass ratio of Ru to Ir and/or Pt can be in a range of 10:1 to 1:10, preferably in a range of 2:1 to 1:2. Preferably, Ru is present in higher amounts than Pt and the amount of Ir is preferably not more than twice the amount of Ru. In this way, a very active and cost-effective catalyst is obtained. Ruthenium is cheaper than Pt and Ir and yet exhibits surprisingly good activity in the catalyst according to the invention, which is even better than that of known catalysts based on Ir or Pt. In particular embodiments, only one of Ir and Pt is present, and preferably no further metals are present in addition to Ru, Ir and Pt. In particular, the presence of alloying metals such as Cu, is avoided.

A further embodiment of the invention is a catalyst ink comprising the catalyst of the invention. Catalyst ink can be obtained by mixing a catalyst powder with water.

A further embodiment of the invention relates to a method for preparing the catalyst described hereinabove, comprising the steps
(i) synthesizing graphene oxide (or other HSSAC material),
(ii) overlaying the graphene oxide (or other HSSAC) with TiO₂,
(iii) adding a Ru precursor to the mixture resulting from (ii), and
(iv) thermally treating the mixture resulting from (iii) in an ammonia atmosphere to yield Ru/TiON-C.

The synthesis of graphene oxide (or other HSSAC) in step (i) can be performed by any known method. For example, a modified Hummers method (a) can be used, as described in more details in Example 1.1.

In step (ii), graphene oxide (or other HSSAC) is coated with TiO₂. For this purpose, graphene oxide (or HSSAC) can be mixed with a solution containing a precursor of TiO₂ followed by hydrolyzation of the TiO₂ precursor to yield TiO₂. In specific embodiments, dried graphene oxide (or HSSAC) is mixed with a solution of Ti isopropoxide in e.g. propanol at room temperature and Ti isopropoxide is then hydrolyzed by adding water. The obtained mixture is then freeze-dried.

In step (iii), TiON-C resulting from step (ii) is contacted with a Ru precursor, such as a Ru(III) salt, and heated. For example, a solution containing RuCl₃·H₂O can be added to the dried mixture and lightly ground at 50 °C until evaporation.

The resulting mixture is then thermally treated in step (iv) in an ammonia atmosphere, in particular an atmosphere containing NH₃, H₂ and an inert gas such as Ar, for example in a mixture of 90% NH₃, 9.5% Ar, and 0.5% H₂. The temperature during thermal treatment can be in a range of about 200°C to 900°C, preferably 250°C to 800°C. In particular embodiments, the temperature is first raised to 200°C-300°C, e.g. about 240°C-260°C for 1-5 hours, e.g. about 2-3 hours, then to 700-800°C, e.g. about 750 °C for 7-12 hours, e.g. 9-10 hours, and then cooled to room temperature. After thermal treatment, the final Ru/TiON-C material is obtained.

Optionally, the Ru/TiON-C composite can be further decorated by adding Ir or Pt precursurs and heating to yield composites wherein Ir or Pt form a shell over Ru core nanoparticles.

The catalyst prepared according to the invention can be finely grinded and coated onto an electrode, in particular an electrode for use in the electrochemical hydrogen evolution.

Another embodiment of the invention is an electrochemical cell, comprising an electrode coated with the catalyst or the catalyst ink described hereinabove, a counter electrode, and an electrolyte. The electrolyte can be an alkaline or acidic aqueous solution. For use in the electrochemical hydrogen evolution, the electrolyte is preferably an alkaline aqueous solution.

The electrode coated with the catalyst of the invention is preferably used as the cathode of the electrochemical cell.

The invention further provides a method for producing hydrogen by electrochemical hydrogen evolution reaction (HER), comprising water electrolysis in alkaline media, wherein water is reduced at a cathode surface comprising a catalyst of the invention.

The invention is further described by reference to the following Figures and Examples, which are not intended to limit the scope of the invention defined in the appended claims.

### FIGURES

- **Fig. 1**: Characterization of Ru/TiON-C catalyst: a) XRD spectra; b) ADF-STEM imaging of Ru/TiON-C and c) particle size distribution.
- **Fig. 2**: XRD simulation of different crystal structures: Ru hcp, Ru fcc and TiON.
- **Fig. 3**: TEM and STEM ADF imaging of a Ru/C catalyst with a usual hcp structure.
- **Fig. 4**: BF and ADF STEM imaging of Ru/TiON-C sample shows the presence of the usual hcp (left panel) and unusual distorted fcc structure (right panel) of Ru nanoparticles.
- **Fig. 5**: STEM ADF imaging of a homemade Ru/TiON-C catalyst displaying particles with different structures: the usual hcp and the distorted cubic Ru.
- **Fig. 6**: SAED and radial profile of the diffraction intensity of a large area, showing plane distances corresponding to Ru-hcp and TiON.
- **Fig. 7**: SAED and radial profile of the diffraction intensity of a large area, showing plane distances corresponding to Ru-hcp and TiON (upper panel); reference lattice values for the present structures: Ru-hcp, Ru-FCC and TiON (lower panel table).
- **Fig. 8**: Survey spectra of Ru/C and Ru/TiON-C samples.
- **Fig. 9**: Deconvoluted C 1s and Ru 3d spectra for samples (a) Ru/C and (b) Ru/TiON-C.
- **Fig. 10**: Comparison of the HER activities of Ru/TiON-C, Ru/C, and Pt/C catalysts (Note that mass loading of Ru in Ru/TiON-C is around 3 times lower than than loading of Pt in Pt/TiON-C): (a) HER polarization curves (Ar-saturated 1 M KOH, 10 mV/s); (b) mass activities at an overpotential of 100 mV; (c) turnover frequencies; (d) stability test of Ru/TiON-C.
- **Fig. 11**: Electrochemical characterization of Ru/TiON-C and Ru/C catalysts. The left panel shows cyclic voltammograms recorded in Ar-saturated 1 M KOH (50 mV/s). The right panel shows the underpotential deposition of Cu used to determine ESA (0.1 M H2SO4 + 2 mM CuSO4, 10 mV/s).
- **Fig. 12**: Specific (ESA-corrected) HER current densities corresponding to an overpotential of 100 mV.
- **Fig. 13**: (a) Tafel plots derived from HER polarization curves from Figure 3a; (b) EIS spectra for Ru/TiON-C, Ru/C, and Pt/C samples recorded at an overvoltage of 30 mV (1 M KOH).
- **Fig. 14**: Comparison of the HER performance of Ru/TiON-C with Ni/C catalyst (1 M KOH, 10 mV/s).
- **Fig. 15**: Polarization curves for HER on Ru/C, Ru/TiON-C and Pt/C recorded in 0.1 M HClO4 (10 mV/s).
- **Fig. 16**: HER polarization curves (1 M KOH, 10 mV/s) collected before and after the potentiodynamic durability test of Ru/TiON-C (Ar-saturated 1 M KOH, 2500 cycles between 0.1 and -0.2 VRHE, 100 mV/s).
- **Fig. 17**: ADF and BF IL-STEM imaging of Ru/TiON-C sample exposed to potentiostatic degradation test (4 h at -0.05 V_{RHE}, 1 M KOH).
- **Fig. 18**: IL-TEM imaging of the Ru/TiON-C sample exposed to durability test (4h potentiostatic hold at -0.05 VRHE). Arrows mark a few examples of Ru particles that have migrated over carbon support.
- **Fig. 19**: The effect of the loading of Ru/TiON-C catalyst on HER performance: (a) polarization curves (1 M KOH, 10 mV/s); (b) MA and (c) TOF values at an overpotential of 100 mV.
- **Fig. 20**: Comparison of HER activities of Ru@lr/TiON-C, Ru@Pt/TiON-C, Ru/TiON-C and various other catalysts in alkaline (a-c) and in acidic electrolyte (d-f).
- **Fig. 21**: Stability investigations of Ru@lr/TiON-C catalyst conducted by extensive potential cycling (10 000 sweeps, potential window -0.1 up to 0.1 VRHE) in alkaline (upper panel) and in acid electrolyte (lower panel).

### EXAMPLES

### 1. Catalysts with Ru supported on titanium-oxynitride

### 1.1 Experimental

### 1.1.1 Synthesis of Ru/TiON-C composite

In the first step of the synthesis of Ru/TiON-C composite, graphene oxide (GO) was synthesized. For the synthesis of GO, we used the slightly modified and improved Hummers method (a), in which a mixture of concentrated H₂SO₄/H₃PO4 (volume ratio = 900 mL:100 mL) was added to 20 g of graphite (Imerys, Timcal KS6L), and then KMnO₄ was added in aliquots (six aliquots of 20 g for graphite with stirring, resulting in a slight exotherm to 35-40 °C. The reaction mixture was then stirred with a mechanical stirrer at room temperature in a 3-liter beaker for 10 days. The reaction mixture was then poured onto ice (1500 ml) and 30 vol% H₂O₂ (about 15 ml) was added dropwise until the color changed from purple to yellow. The mixture was then transferred to 1 L plastic centrifuge bottles, diluted with ultrapure water and centrifuged at 10 500 rpm for 30 minutes in a centrifuge (Sorvall LYNX 4000, Thermo Scientific). The supernatant was decanted, and the remaining solid was redispersed in a 5 vol% HCl ultrapure water solution for 2 hours. The final purification step involved redispersing and soaking the suspension GO in ultrapure water until the next day. The supernatant was then discarded by centrifugation at 10 500 rpm for 1 hour. This final purification step was repeated a total of four times. After the last supernatant was discarded, GO was again dispersed in ultrapure water. In the case of GO, the suspension was treated with a homogenizer (Ultraturrax T-25 basic, IKA) for 1 hour at maximum rpm to whip the product. Finally, the GO was freeze-dried. In the next step, the TiO₂ coating was prepared on GO. For this purpose, 0.1 g of the dried GO was mixed with 1 mL of propanol (Honeywell, 99.8%) containing 1 mmol of Ti isopropoxide (Aldrich, 97%). After mixing at room temperature, the Ti isopropoxide was hydrolyzed by adding 0.4 mL of water (Milli-Q water, 18.2 MΩ cm). The obtained mixture was then freeze-dried. In the third step, a 1.5 mL acetone solution containing 0.1 mmol RuCl₃·H₂O (Apollo Scientific) (1.5 mL) was added to the dried mixture and lightly ground in a mortar at 50 °C until evaporation. The mixture was then thermally treated in a mixture of 90% NH₃, 9.5% Ar, and 0.5% H₂. The temperature was first raised to 250 °C at a rate of 2 °C min⁻¹ for 2 hours, then to 750 °C at a rate of 10 °C min⁻¹ for 9 hours, and then cooled to room temperature at a rate of 10 °C min⁻¹. After thermal treatment, the final Ru/TiON-C material contained 6 wt.% Ru, as revealed by inductively coupled plasma optical emission spectrometry analysis (ICP-OES).

Ruthenium nanoparticles on carbon black (Ru/C) were prepared by dissolving 0.2 mmol RuCl₃*H₂O (Apollo Scientific) in 1 mL water. Then, the obtained solution was mixed with 80 mg of carbon black (Vulcan XC72R, Cabot, USA) at 50 °C until evaporation by gentle grinding in a mortar. Then the mixture was thermally treated in an ammonia atmosphere. The temperature was increased at a rate of 2 °C min⁻¹ to 500 °C for 1 h and then cooled to room temperature with a rate of 10 °C min⁻¹.

After the thermal treatment, the final Ru/TiON-C and home-made Ru/C materials contained 6 and 9 wt. % of Ru, respectively, according to the ICP-OES analysis.³¹ Commercial Pt/C and Ni/C (20 wt.%) catalysts used in this work were purchased from Premetek.

### 1.1.2 Characterization of Ru/TiON-C

The obtained Ru/TiON-C composite was characterized by XRD, (S)TEM, and XPS. XRD pattern was recorded using a D4 Endeavor, Bruker AXS diffractometer with Cu-Kα radiation (λ = 1.5406 Å), and a Sol-X energy-dispersive detector. For the detailed microstructural investigation, a Cs probe corrected scanning transmission electron microscope (Jeol ARM 200 CF) operated at 80 kV was used. X-ray photoelectron spectroscopy (XPS) measurements were performed with the Versa probe 3 AD (Phi, Chanhassen, MN, US) using a monochromatic Al K_{α} X-ray source at an operating voltage of 15 kV and an emission current of 3.3 mA. Powder samples were placed on double-sided Scotch tape. Spectra were acquired on a 1 × 1 mm² analysis spot size. During the measurements, the charge neutralizer was on. High-resolution (HR) spectra were measured at a pass energy of 27 eV and the binding energy (BE) step of 0.1 eV. Survey spectra were measured at a pass energy of 224 eV and the BE step of 0.8 eV. Every spectrum was acquired with at least 20 sweeps to improve the signal-to-noise ratio. The BE scale of XPS spectra was corrected using the C 1s peak at BE of 284.4 eV, corresponding to the partially graphitized carbon support (part) of the samples. Data processing (including fitting) was performed with the MultiPak 9.0 software. The Shirley background subtraction was used for all measurements. Four main doublet peaks were identified in Ru 3d region for both Ru/C and Ru/TiON-C samples corresponding to the Ru⁰, RuO₂, RuO₃, and RuO₄. The spin-orbit splitting value was kept constant at 4.17 eV for all the bands between Ru 3d_{5/2} and Ru 3d_{3/2}. The peak shape was chosen to be asymmetric for Ru⁰ and symmetric (80% Gauss, 20% Lorentz) for oxide species. The full width at half maximum (FWHM) was fixed for both samples at 0.7 for Ru⁰, 1.1 for RuO₂, 1.4 for RuO₂, and 1.5 for RuO₄.

### 1.1.3 Electrochemical characterization and HER investigations

For all catalysts (Ru/TiON-C, Pt/C, Ru/C and Ni/C), catalyst inks were prepared by mixing the catalyst powder with ultrapure water (18.2 MΩ cm) in 1 mg/ml ratio. Mixtures were subjected to an ice-cooled ultrasonic bath over 30 minutes to obtain finely dispersed catalyst ink. To produce working electrodes, 20 µL of catalyst ink was pipetted directly from the ultrasonic bath onto polished glassy carbon rotating disk electrodes (Pine, 5 mm in diameter). After drying under clean ambient conditions, the catalyst films were covered with 5 µl of Nafion (Sigma, 5% solution in a mixture of lower aliphatic alcohols and water) diluted in isopropanol (1/50) to ensure good adhesion. The resulting loadings were 6.1, 9.2, and 20.4 µg cm⁻² for Ru/TiON-C, Ru/C, and Pt/C, respectively, with respect to the metal (Ru or Pt).

Electrochemical characterization and HER investigations were performed in argon-saturated 1 M KOH electrolyte (Merck) in a classical thin-film rotating disk electrode setup (TF-RDE), unless stated otherwise. In order to avoid contamination by the glass corrosion, all electrochemical experiments in alkaline media were conducted in a Teflon cell, with a hydrogen reference electrode (Hydroflex from Gaskatel) and a glassy carbon rod as reference and counter electrodes, respectively. To ensure reproducible baseline response prior to measuring activity, all catalyst films were subjected to rapid voltammetric activation (300 mV/s, 50 cycles, 0.05 - 1 V_{RHE}) in the Ar-saturated 1 M KOH electrolyte. HER activities were measured by recording the polarization curves at a scan rate of 10 mV/s in the potential region 0.1 to -0.2 V_{RHE}. Electrochemical impedance spectroscopy (EIS) was performed at HER overvoltage of 20 mV in the frequency range between 50 mHz and 100 kHz with an amplitude of 10 mV. The stability of Ru/TiON-C was measured by potential cycling (2500 cycles, 100 mV/s, -0.2 - 0.1 V_{RHE}) and by a potential hold in a gas diffusion electrode (GDE) setup at an overvoltage of 30 mV. Identical location STEM (IL-STEM) was performed to additionally probe the durability of Ru/TiON-C. For this purpose, the modified floating electrode (MFE) setup was used. ³² The gold TEM grid was coated with 5 µL of the catalyst ink and the excess liquid was removed to ensure the formation of a very thin catalyst layer to enable easier IL-STEM imaging. Several locations of the pristine catalyst were imaged and then the grid was mounted in MFE for a potentiostatic durability test at - 0.05 V_{RHE} over 4 h in the same 1 M KOH electrolyte. The identical locations of the catalyst ink were imaged after the test to observe possible changes in the Ru/TiON-C nanostructure. Both GDE and MFE setups are conducted in glass-free equipment made out of Teflon. For the sake of comparison, HER activities of Pt/C, Ru/C and Ru/TiON-C samples were screened also in an acidic electrolyte (0.1 M HClO₄). The method of underpotential deposition of Cu was used to determine the electrochemical surface area (ESA) of Ru/TiON-C and Ru/C samples.³³ These measurements were performed in 0.1 M H₂SO₄ in the absence and presence of 2 mM CuSO₄. In the case of Pt/C, ESA was determined by CO stripping voltammetry.³⁰

### 1.2 Results and discussion

### 1.2.1 Characterization of Ru/TiON-C catalyst

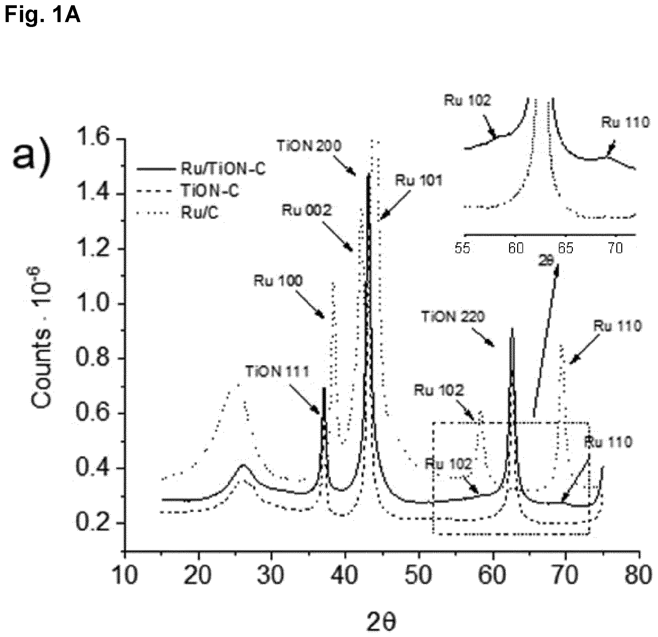

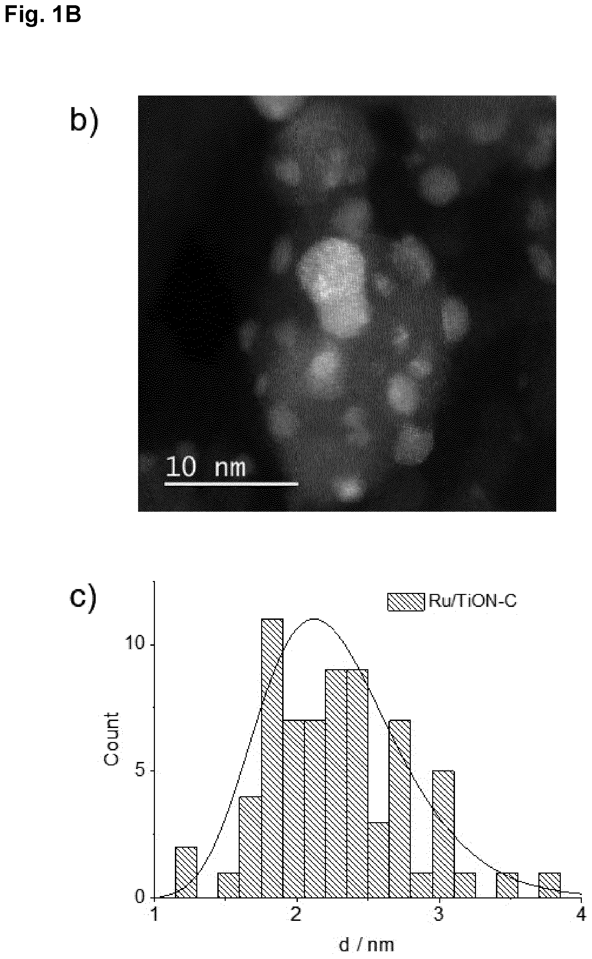

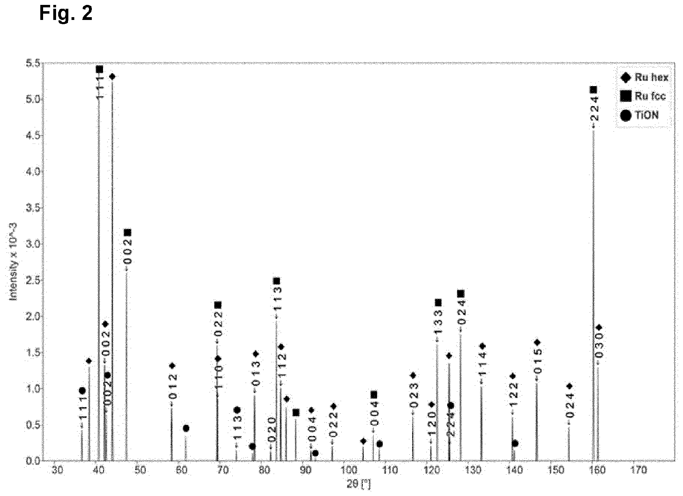

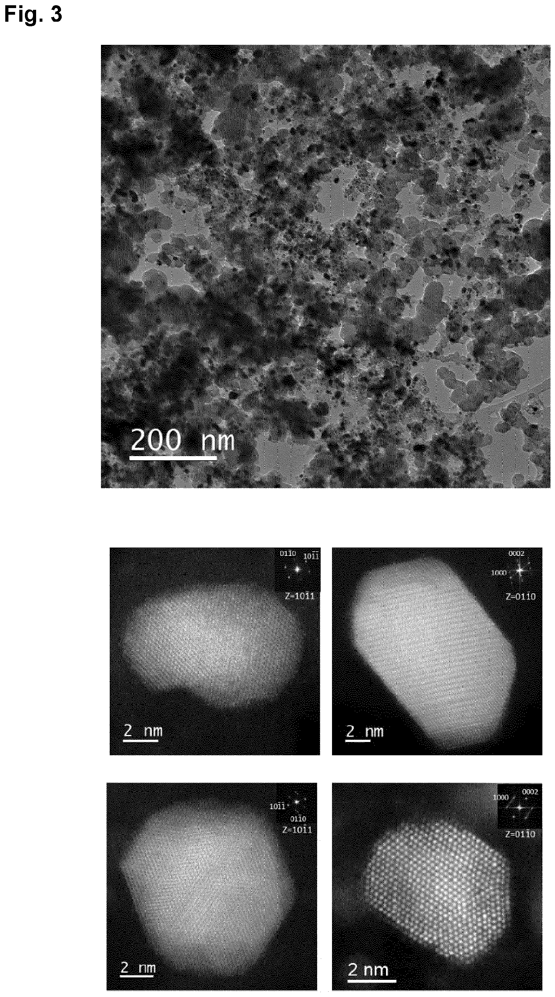

The structural characterization of the Ru/TiON-C sample is given in Figure 1. XRD pattern of the Ru/TiON-C is presented together with the patterns of Ru-free underlying TiON-C composite and Ru/C analog, Figure 1a. It has been established earlier that the anomalous Ru-fcc structure may appear in certain cases (in addition to usual hcp Ru) and lead to improved HER activities.¹⁹⁻²¹ Since the TiON substrate has a fcc-structure, it can enable the epitaxial growth of the supported Ru nanoparticles in Ru/TiON-C. Simulated XRD spectra of Ru-hcp, Ru-fcc and TiON structures are presented in Figure 2 showing that the identification of the Ru-fcc structure in Ru/TiON-C is difficult due to the size of the particles deriving in broad peaks, and overlapping of TiON 111 and 200 reflections with the Ru-fcc 111 and 002 reflections (which also overlap with some hcp-Ru reflections). In the case of the Ru/C, all characteristic peaks related to the usual hcp-Ru structure can be seen in the XRD pattern (labeled in Figure 1a), while STEM imaging of the Ru/C sample (Figure 3) revealed the presence of Ru nanoparticles with an average diameter of 7.5 nm. Diffraction peaks corresponding to the TiON support can be seen in patterns of both TiON-C and Ru/TiON-C; in the latter, they overlap with Ru-hcp 100, 002, and 101 reflections and mask them due to the much higher intensity. In the pattern of Ru/TiON-C, only very broad and low-intensity peaks at 2*θ* values of around 58.4 and 69.4° can be discerned which are clearly not present in the pattern of the bare support (see inset in Figure 1a). These peaks match 2θ values of 012 and 110 reflections of hcp-Ru, respectively. Alternatively, the peak at 2θ = 69.4° may originate from 022 Ru-fcc reflection, however, it is difficult to claim this due to the full overlap of these two peaks. The low intensity and shape of these peaks indicate the presence of very small Ru particles with low loading in the Ru/TiON-C sample, which is confirmed by STEM imaging (Figure 1b) and corresponding particle size distribution (Figure 1c). In the case of the Pt/C used for benchmarking the HER performance, a similar characterization can be found in our previous work.³⁰ In brief, commercial Pt/C (20 wt.%, Premetek) contains small-sized Pt nanoparticles with an average diameter between 1-3 nm, which is very close to the particle size in the Ru/TiON-C sample.

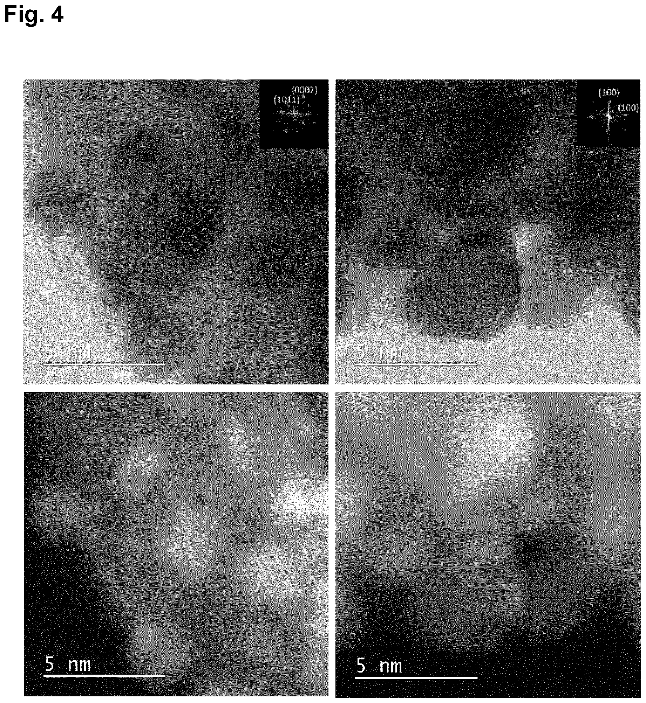

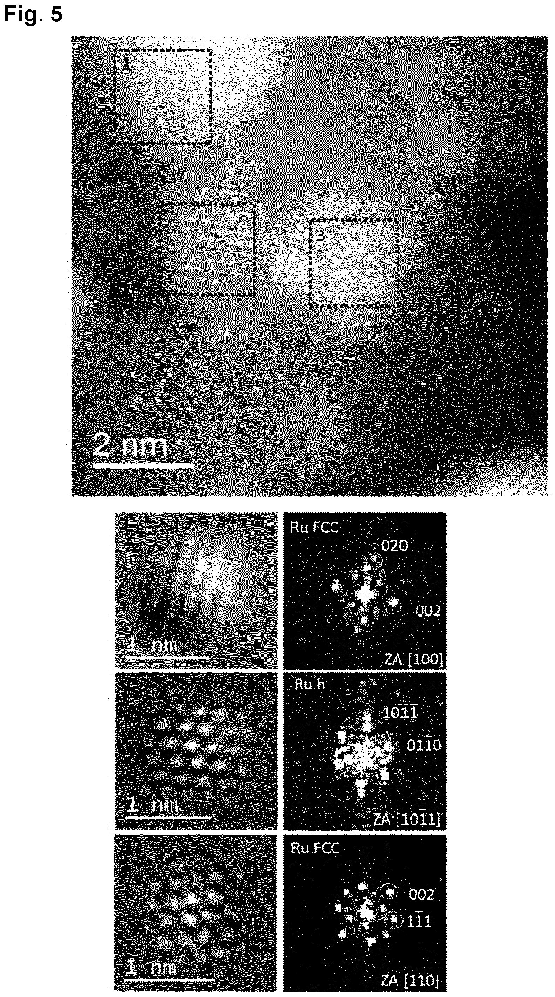

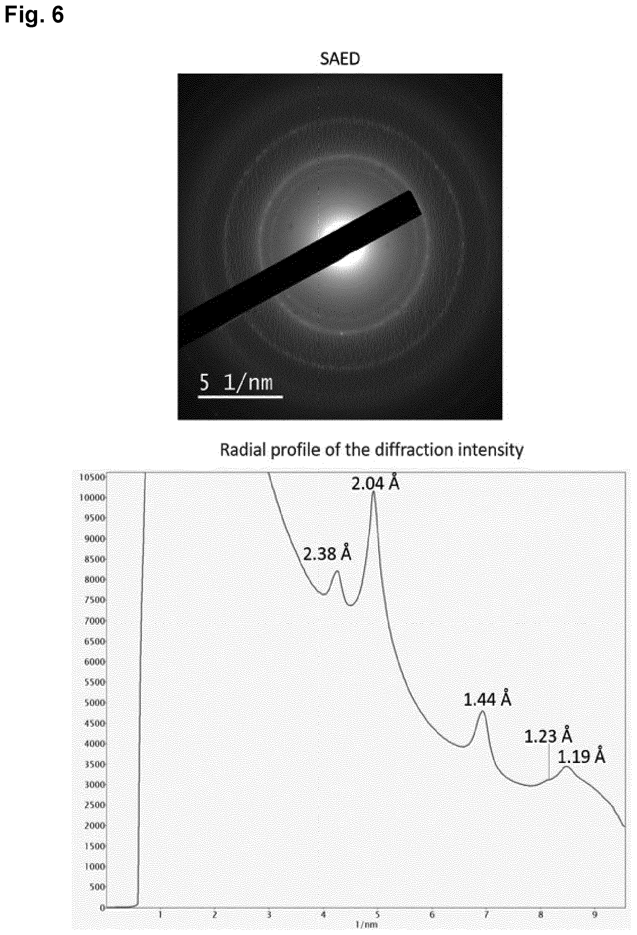

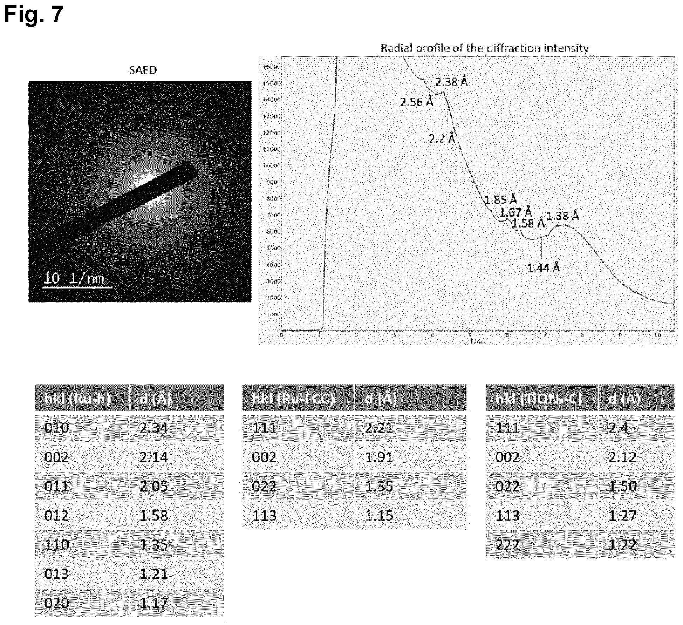

To further investigate the possible presence of fcc-Ru structure, an additional analysis of the Ru nanoparticles in Ru/TiON-C was performed using STEM imaging, Figure 4. Ru particles in the Ru/TiON-C sample contain mostly hcp structures, however, the presence of distorted fcc structures was observed as well. This is also evidenced in Figure 5, where an ADF image of the Ru/TiON-C sample shows a few Ru particles on the TiON support, one with the expected hcp structure while the others display a distorted cubic (fcc) structure. Selected area electron diffraction patterns (SAED) along with radial profile diffraction intensity revealed mainly an hcp structure (Figure 6). However, in reduced areas, some of the measured values were very close to those of the fcc structure lattice planes (Figure 7). Our observations lead us to deduce that there is a certain amount of the distorted cubic face present in the Ru/TiON-C sample. In the case of Ru/C, only the expected hcp structure was detected, as depicted in Figure 3 which means that the existence of the distorted fcc structure can be ascribed to the effect of the TiON support. However, it is important to keep in mind the similarities between hcp and fcc structures. At these small scales (and short-range ordering), the two structures might differ in the stacking of one layer. Nonetheless, these subtle differences in the structure of Ru nanoparticles are known to have a significant effect on their electrocatalytic properties for HER.¹⁹

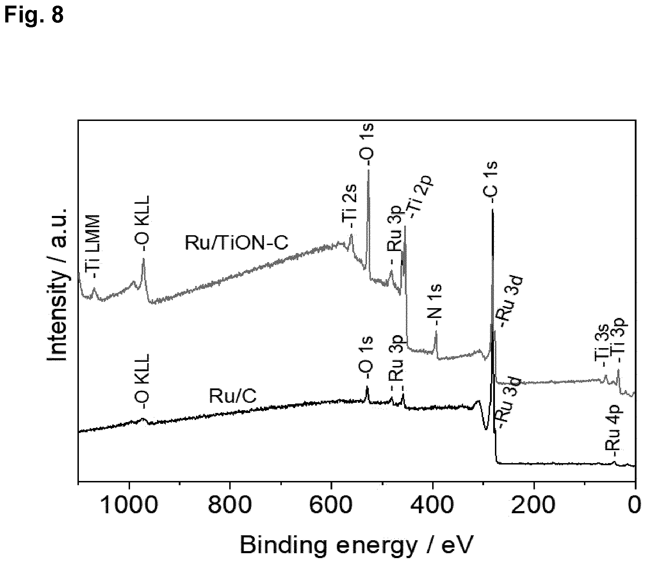

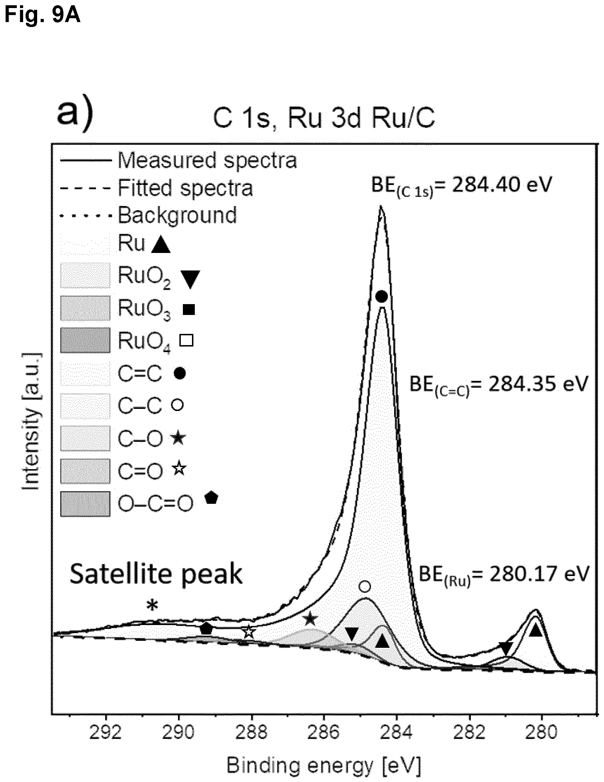

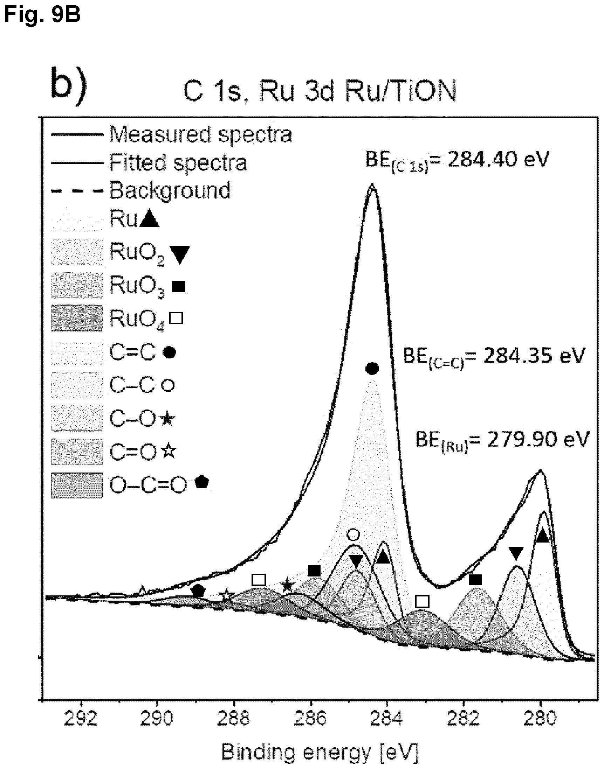

To get insight into possible metal-support interactions between TiON and Ru, we performed X-ray photoelectron spectroscopy and compared it with the Ru/C analog, in which much weaker interactions between carbon and Ru are expected. Survey spectra for both Ru/C and Ru/TiON-C are given in Figure 8, while the corresponding more detailed analyses of deconvoluted C 1s and Ru 3d spectra are given in Figure 9.

When the normalized Ru 3d spectra are compared, a slight difference in the position of the Ru 3d_{5/2} peak can be observed. In particular, the Ru 3d_{5/2} peak position for Ru/TiON-C (280.0 eV) is shifted toward lower binding energies (BE) compared to the Ru/C (280.2 eV). This suggests a difference in the electronic interaction of Ru NPs with the carbon or TiON supports, which could be attributed to MSI in the latter case. However, the shape of the Ru 3d regions indicates the presence of more than just Ru⁰ species in the samples. By fitting the spectra using the parameters as described in the experimental section, a total of four Ru species (Ru⁰, RuO₂, RuO₃ and RuO₄) were identified in both Ru/C (Figure 9a) and Ru/TiON-C (Figure 9b). The positions of the peaks for Ru⁰, RuO₂, RuO₃ and RuO₄ determined for Ru/C are 280.2 eV, 281.0, 281.9 and 283.4 eV, respectively. The peaks for Ru⁰, RuO₂, RuO₃ and RuO₄ for Ru/TiON-C were identified at 279.9, 280.6, 281.6 and 283.1 eV, respectively. When the positions of the Ru⁰ peaks for samples Ru/C and Ru/TiON-C are compared, an even larger shift of 0.3 eV toward lower BE is observed in the Ru/ TiON sample. The position of the peaks for the Ru oxide species follows the same trend, where the oxides present in the Ru/TiON-C sample are located at lower BE. This shift of BE indicates a rearrangement in the electron density on Ru caused by the interaction with underlying TiON, which can favor the electrocatalytic activity of supported Ru. Overall, the XPS results substantiate our hypothesis that the TiON support triggers MSI with Ru nanoparticles.

### 1.2.2 Electrocatalytic HER investigations

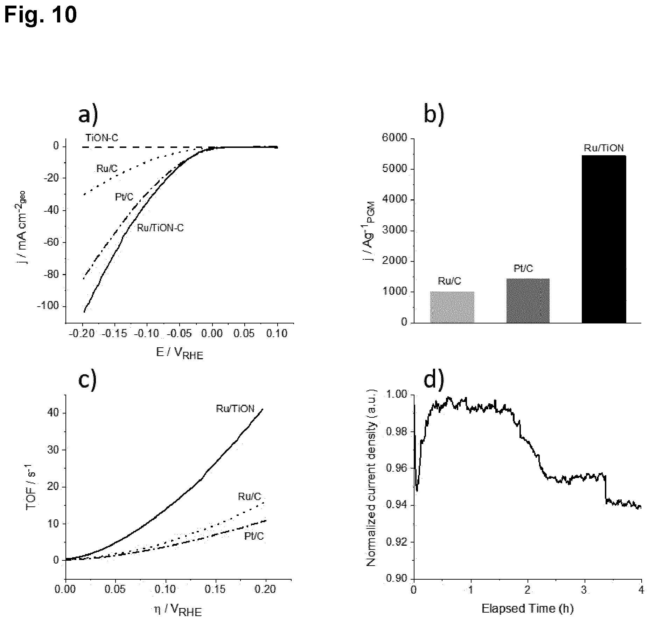

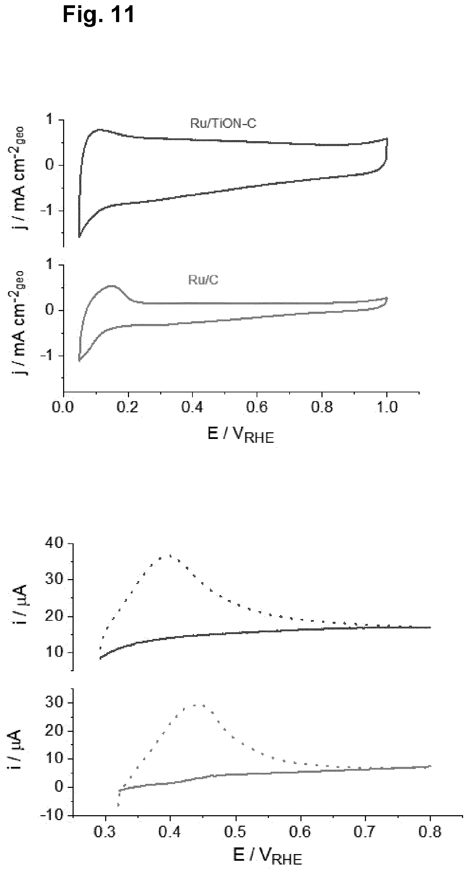

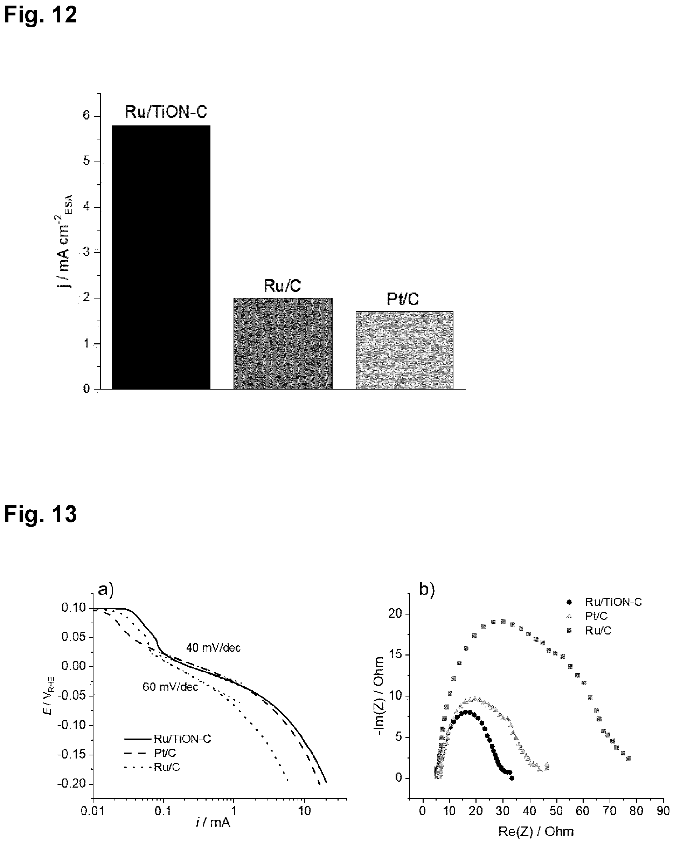

The electrocatalytic HER performance of Ru/TiON-C in an alkaline electrolyte was compared with Ru/C and Pt/C benchmark catalysts, as presented in Figure 10. Collected polarization curves for HER in 1 M KOH, Figure 4a, reveal that the Ru/TiON-C sample is significantly more active than the Ru/C analog, and also surpasses the activity of the Pt/C benchmark. It can be noted that the TiON-carbon composite itself is totally inactive for HER in the investigated potential region. The overpotential needed to reach the current density of 10 mA cm⁻² (*η*₁₀) is commonly used as a figure of merit describing the practical applicability of the catalytic materials. For the Ru/C, Pt/C, and Ru/TiON-C catalysts, *η*₁₀ values of 102, 45, and 42 mV were obtained, respectively. Accessing mass activities (MA) of these catalysts can illustrate their techno-economic viability. A comparison of MAs of the Ru/TiON-C, Ru/C, and Pt/C samples, Figure 4b, showcases the superior performance of Ru/TiON-C. At the overpotential of 100 mV, Ru/TiON-C delivers MA of 5440 A g⁻¹_{Ru}, which is nearly 5.5 and 4 times higher MA of Ru/C and Pt/C, respectively. More insights into the intrinsic HER activity can be obtained by evaluating the turnover frequencies (TOF) of the compared catalysts. TOF values were calculated according to the previously used methodology, which considers the real electrochemical surface area (ESA) of the catalysts.^{11,34} In the case of Ru/C and Ru/TiON-C, ESA values of 50.1 and 92.8 m²/g were determined by the method of underpotential deposition of copper,³³ Figure 11, while for Pt/C ESA of 89 m²/g was obtained through CO stripping voltammetry.³⁵ Comparison of the TOF values reveals that the Ru/TiON-C catalyst significantly surpasses both carbon-supported benchmarks, Figure 4c. TOF values of 4.0, 5.1, and 14.1 s⁻¹ were obtained at 100 mV overvoltage for Pt/C, Ru/C, and Ru/TiON-C, respectively. A comparison of the specific current densities at an overvoltage of 100 mV, Figure 12, follows the trends seen in TOF values. Tafel analysis, Figure 13a, reveals the Tafel slope value of around 40 mV/dec for Ru/TiON-C, similar to that of Pt/C and indicates the Volmer-Heyrovsky pathway, while the slope of 60 mV/dec was fitted for Ru/C. Electrochemical impedance spectroscopy, Figure 13b, shows a significantly lower charge transfer resistance for the Ru/TiON-C composite than for Pt/C and Ru/C.

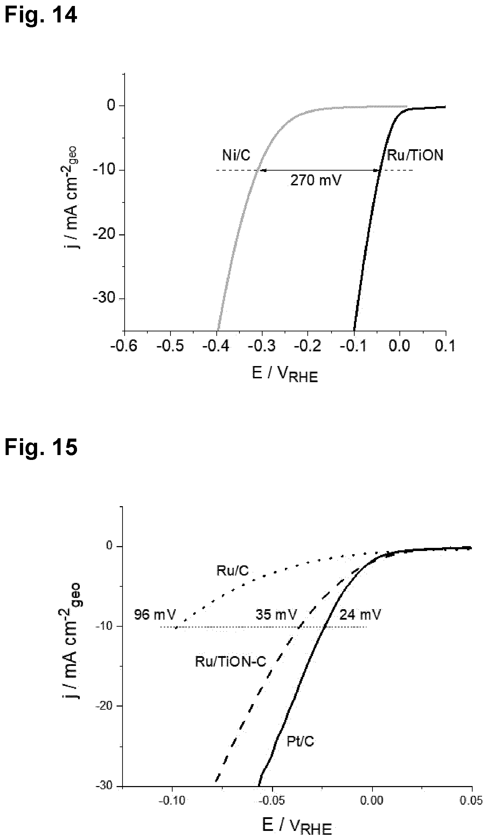

Another relevant comparison for the performance of Ru/TiON-C composite is with industrially viable materials, such as Ni-based catalysts, Figure 14. It can be seen that Ru/TiON-C is significantly more active than Ni/C (20 wt.% from Premetek, we note higher Ni loading and the significantly lower price of Ni with respect to Ru), which needs 270 mV larger overpotential to reach the current density of 10 mA cm⁻².

Furthermore, we tested the HER performance of Ru/TiON-C in acid media, Figure 15. Ru/TiON-C is significantly more active than Ru/C and slightly less active than the Pt/C benchmark in the 0.1 M HClO₄ electrolyte. A comparison of *η*₁₀ values shows a difference of only 11 mV between Pt/C and Ru/TiON-C, while the more pronounced difference of 61 mV is between Ru/C and Ru/TiON-C. These results may serve as indirect proof that TiON is able to tune the adsorption energy of H* atoms on Ru-sites, as this is the crucial step for enhancing HER in acid media.

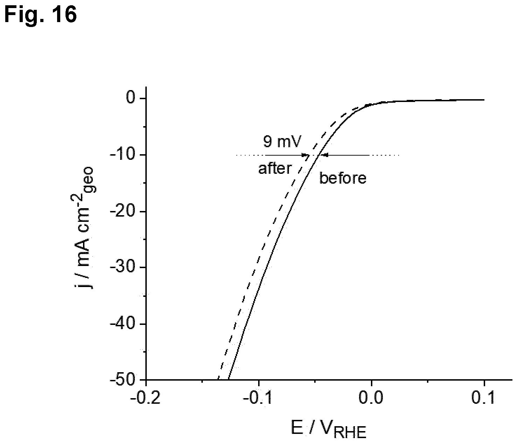

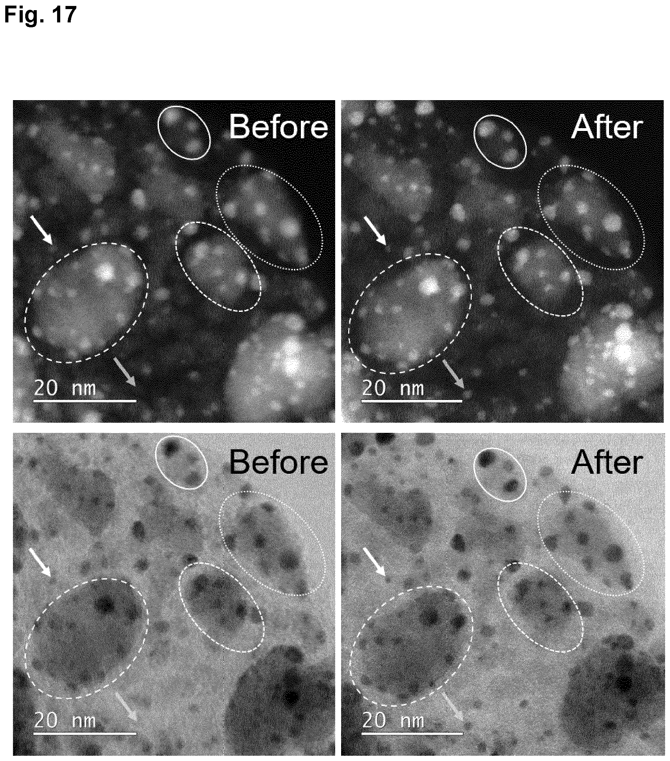

Probing the durability of materials for gas-evolving reactions is always challenged by the formation of microbubbles attached to the active sites which may lead to erroneous conclusions on the (in)stability of the catalysts.^{36,37} In order to alleviate this issue, the stability of the Ru/TiON-C catalyst during HER was probed in different conditions, namely potentiostatic and potentiodynamic, and in different setups, namely TF-RDE, GDE and MFE. Extensive potential cycling (2500 cycles, 100 mV/s, potential region between 0.1 and -0.2 V_{RHE}) was performed in the TF-RDE setup. Results obtained at the end of this test showed slight activity decay of 9 mV at the current density of -10 mA cm⁻², Figure 16. In an effort to minimize the impact of microbubbles formed during the test, we periodically used (at every 250 HER scans) a few rapid potential cycles between 0.05 - 1 V_{RHE} to promote oxidation and release of hydrogen bubbles. This quick potential cycling might induce non-HER-related degradation of Ru/TiON-C which may contribute to the observed activity decay. For a long-term potentiostatic durability test, we used a gas-diffusion electrode (GDE) assembly in which we exposed Ru/TiON-C to an overvoltage of 30 mV over 4 h. GDE is known to be closer to the realistic membrane electrode assembly conditions than RDE and allows improved mass transport of gaseous reactants or products, ³⁸ which should be helpful when investigating gas-evolving reactions. Ru/TiON-C exhibited quite stable HER running during the potential hold of 4 h (*η* = 30 mV) with negligible current decay, Figure 10d. Even in GDE, it can be clearly seen how the microbubble formation affects the durability assessment (see the rapid current drops in Figure 3d after approximately 1.5 and 3 h). To investigate possible changes in the nanostructure of the Ru/TiON-C during HER, we performed an identical location STEM (IL-STEM) study by depositing the catalyst on the TEM grid and exposing it to a potentiostatic hold at -0.05 V_{RHE} in MFE setup over 4 h, Figure 17.

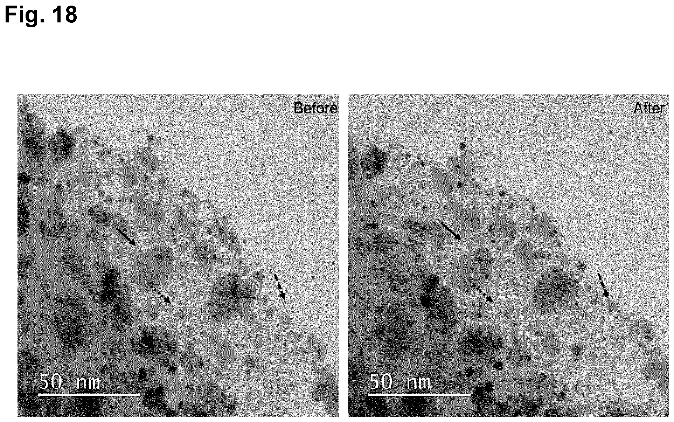

Degradation of nanocatalysts during HER is commonly caused by particle migration over carbon support due to weak interactions resulting in particle detachment and/or agglomeration.^{30,39,40} IL-STEM imaging reveals that the Ru/TiON-C composite remained stable during the potentiostatic test and that neither of the two mentioned degradation mechanisms took place to a notable extent. This is particularly valid for Ru particles attached to TiON flakes, where no discernible changes occurred (a few examples are labeled by matching color circles in Figure 5). It is expected that TiON anchors the Ru particles more strongly than carbon, as shown in our recent work with Pt/TiON composite,³⁰ which would inhibit their migration during HER. Only a few very subtle changes in the catalyst nanostructure can be seen, which are marked by white and purple arrows in Figure 5. In both cases, based on the STEM brightfield and ADF images, it can be speculated that these particles migrated over carbon (and not TiON). A few more similar examples of particle migration over carbon can be observed in IL-STEM images with lower magnification, Figure 18. Overall, based on different durability tests, it can be concluded that Ru/TiON-C is fairly stable during HER in alkaline media.

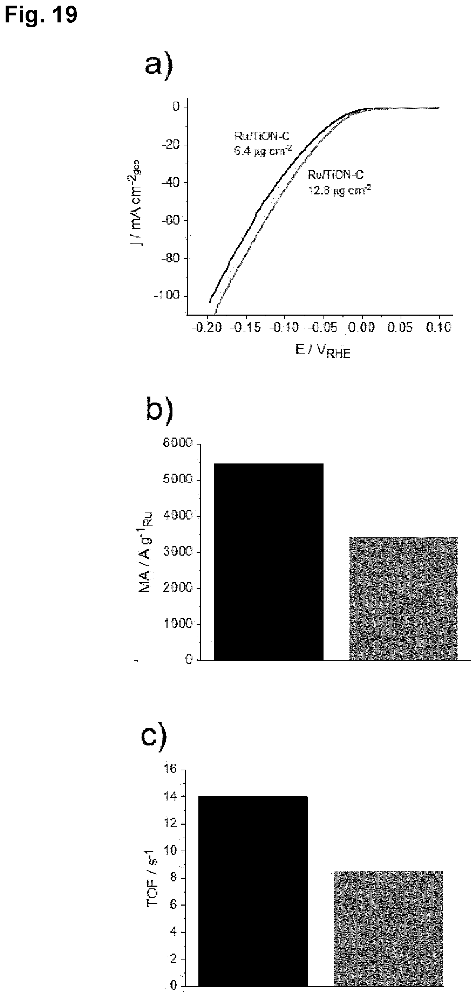

A comparison of the main HER activity descriptors for Ru/TiON-C with the literature data on the relevant high-performing Ru-based catalysts is given in Table 1. The first highlight of our Ru/TiON-C material is the significantly lower mass of Ru as the active compound with respect to the loadings used across the literature (note that in some cases loading of Ru is not even reported). Our catalyst provides fairly comparable *η*₁₀ value with literature data, although there are some impressively low reported overvoltages, for instance, 15 mV, 17 mV, and 5 mV for Cu-Ru alloy¹⁵, Ru@C₂N catalysts³⁴, and Ru single atoms and nanoclusters,⁴¹ respectively. However, this parameter may not reflect the intrinsic activity, as it can be substantially affected by the loading of the catalyst.^{11,15} This is showcased for Ru/TiON-C in Figure 19, where one can see that increased loading of the catalyst resulted in the lowering of the overpotential, but at the same time, MA and TOF values decay. Therefore, we focus more on comparing the intrinsic HER activity and techno-economic viability, through the TOF and MA values given in Table 1. In that regard, Ru/TiON-C composite significantly surpasses the current literature reports on various Ru-based materials listed in Table 1. Here we note that direct comparison of TOFs may be difficult due to different methods used to calculate TOF values. Finally, it is worth noting that Ru/TiON-C composite fairly compares even with Ru-single atom catalysts, known for maximizing metal utilization.^{41,42}

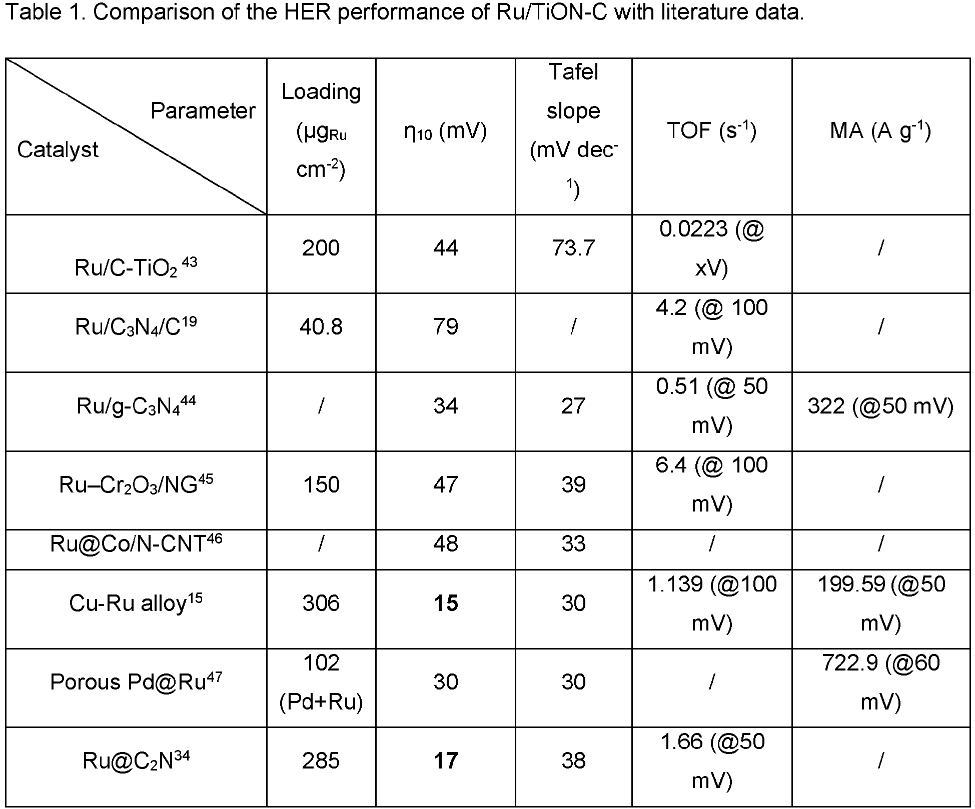

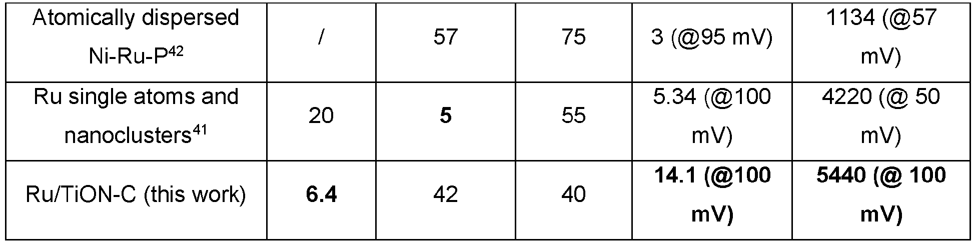

The enhanced HER performance of the Ru/TiON-C sample can be linked with the dual effect of TiON on Ru active sites: (i) the promoted epitaxial growth of distorted Ru fcc nanostructures in the Ru/TiON-C catalyst (see Figures 4-7); (ii) according to XPS, TiON is able to trigger the MSI effect with supported Ru nanoparticles (see Figure 9). The presence of unexpected Ru-fcc structure was shown to be very beneficial for the HER performance of Ru-catalysts.¹⁹⁻²¹ Namely, it was shown that the water dissociation barrier on Ru-fcc is notably lower than on Ru-hcp as well as on Pt, resulting in superior alkaline HER performance.¹⁹ On the other hand, TiON can impact the catalytic performance of Ru-sites via MSI, as shown in our previous works with Pt³⁰ and Ir⁴⁸. MSI may affect both the adsorption energy of H atoms on Ru-sites and the water dissociation barrier. Based on the observed acidic HER trends, Fig. 15, it can be proposed that TiON tunes hydrogen adsorption energy on Ru via MSI, which is manifested by much more favorable reaction kinetics on Ru/TiON-C than on Ru/C and a significant approach to the activity of Pt/C.

### 2. Activities of catalysts with bimetallic Ru and Ir or Ru and Pt nanoparticles supported on TiON

Bimetallic Ru@Ir/TiON-C was prepared with a final mass loading of Ru and Ir of 5.2 and 8.8 wt.%, respectively. As for Ru@Pt/TiON-C, Ru and Pt loadings were estimated at 5.6 and 1.8 wt.%, respectively. The resulting catalysts were characterized using XRD, XPS, and TEM.

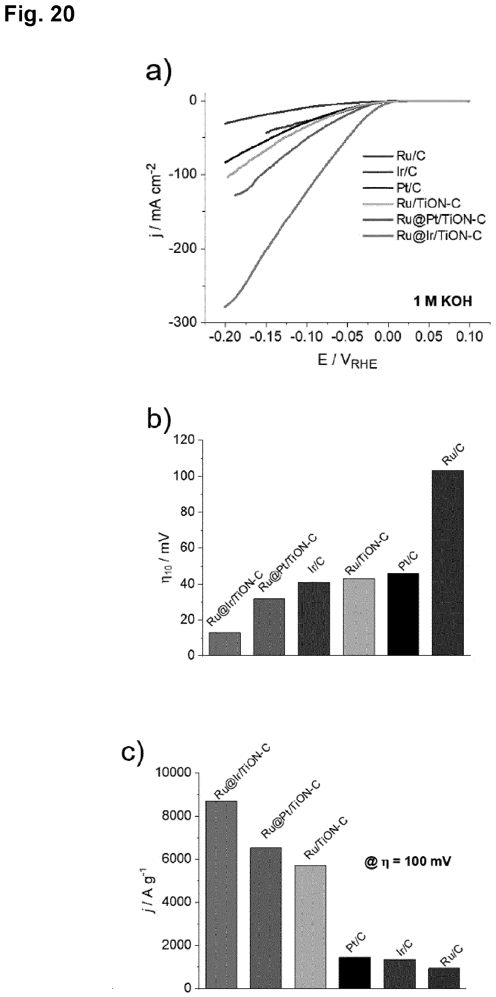

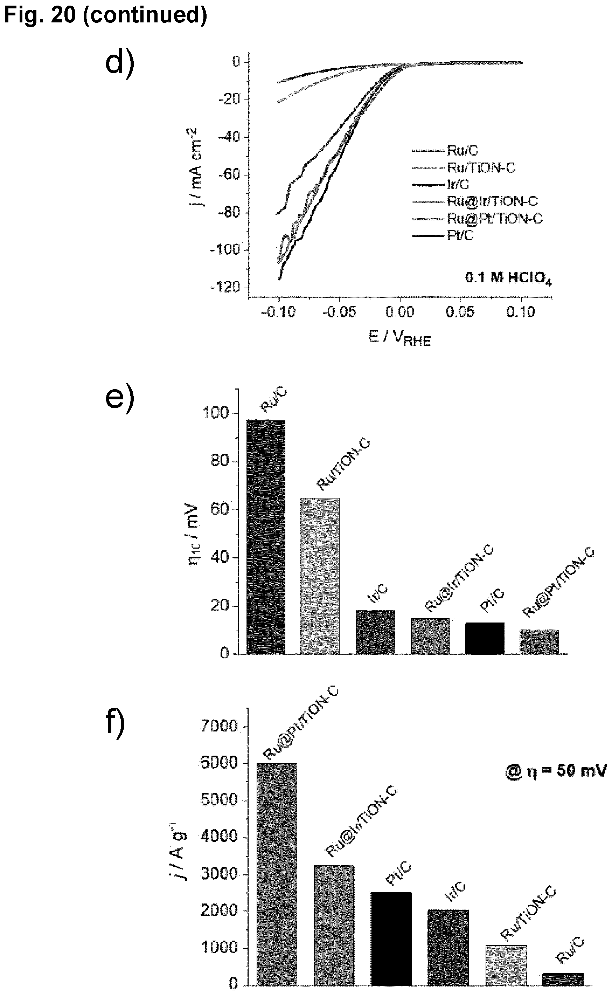

The activities of Ru@Pt/TiON-C and Ru@Ir/TiON-C for HER were investigated in both alkaline and acid media (Fig. 20). As for the alkaline media, the novel materials exhibited superior HER activity compared to all investigated carbon-supported counterparts (Ru/C, Ir/C, Rulr/C, and Pt/C) (Fig. 20a). More importantly, adding Ir and Pt enhanced the activity of Ru/TiON-C (Example 1). Ru@lr/TiON-C shows quite dominant performance in alkaline media, followed by Ru@Pt/TiON-C. This is further exemplified in Figure 20b, where overpotentials needed to reach 10 mA cm⁻² are compared. Furthermore, the Ru@lr/TiON-C and Ru@Pt/TiON-C catalysts exhibited the highest mass activity of all investigated materials (Figure 20c) which is industrially the most relevant parameter. To summarize, Ru@lr/TiON-C showed the best catalytic properties in alkaline media, followed by Ru@Pt/TiON-C.

Parallel investigations were conducted in acid media, where the two novel catalysts again showed excellent HER properties (Fig. 20d-f). Ru@Ir/TiON-C and Ru@Pt/TiON-C surpasses Ru/C, Ir/C, and Rulr/C, while being comparably active as the Pt/C benchmark (Fig. 20d). A comparison of overpotentials needed to reach 10 mA cm⁻², Figure 20f, corroborates excellent acidic HER properties of novel bimetallic catalysts. Regarding mass activity, both Ru@Pt/TiON-C and Ru@Ir/TiON-C surpassed the Pt/C benchmark (Fig. 20f). It should be noted that Ru@Pt/TiON-C showed dominant mass activity to all investigated catalysts in acid media (Fig 20f), which qualifies it as a highly promising material to substitute Pt-benchmarks in proton exchange membrane water electrolyzers. It should be underscored that, when considering current prices of Ru and Pt, low-loaded Ru@Pt/TiON-C is more than 4 times more cost-effective than the Pt/C used for comparison.

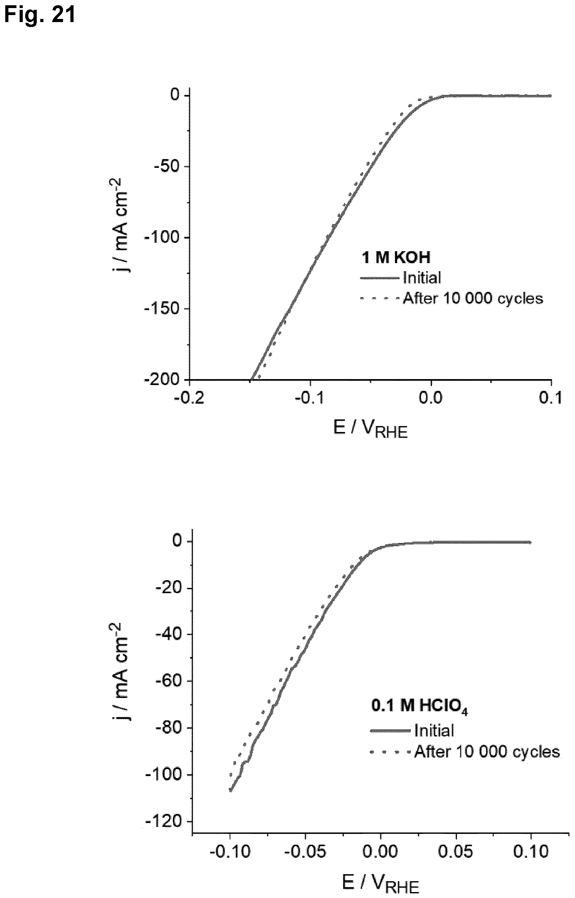

As for the durability, stability investigations were conducted by extensive potential cycling (10 000 sweeps, potential window -0.1 up to 0.1 V_{RHE}) in alkaline and in acidic electrolyte. Ru@Ir/TiON-C catalyst exhibited stable HER operation during potentiodynamic degradation tests (Fig. 21). Similar results are obtained for Ru@Pt/TiON-C (not shown).

Enhanced HER activity of Ru@lr/TiON-C and Ru@Pt/TiON-C materials can be ascribed to the combination of alloying and MSI induced by TiON, which cumulatively tune HER activity descriptors, namely adsorption energetics of H-intermediates and water dissociation barrier. Therefore, these catalysts exhibited excellent HER performance in both acid and alkaline electrolytes.

### References

(1) Bockris, J. O. M. The Hydrogen Economy: Its History. Int J Hydrogen Energy 2013, 38 (6), 2579-2588. https://doi.org/10.1016/j.ijhydene.2012.12.026.
(2) Bockris, J. O. M. The Origin of Ideas on a Hydrogen Economy and Its Solution to the Decay of the Environment. Int J Hydrogen Energy 2002, 27 (7-8), 731-740. https://doi.org/10.1016/S0360-3199(01)00154-9.
(3) Møller, K. T.; Jensen, T. R.; Akiba, E.; Li, H. wen. Hydrogen - A Sustainable Energy Carrier. Progress in Natural Science: Materials International 2017, 27 (1), 34-40. https://doi.org/10.1016/j.pnsc.2016.12.014.
(4) Carmo, M.; Fritz, D. L.; Mergel, J.; Stolten, D. A Comprehensive Review on PEM Water Electrolysis. Int J Hydrogen Energy 2013, 38 (12), 4901-4934. https://doi.org/10.1016/j.ijhydene.2013.01.151.
(5) Ayers, K.; Danilovic, N.; Ouimet, R.; Carmo, M.; Pivovar, B.; Bornstein, M. Perspectives on Low-Temperature Electrolysis and Potential for Renewable Hydrogen at Scale. Annual Review of Chemical and Biomolecular Engineering. Annual Reviews 2019, pp 219-239. https://doi.org/10.1146/annurev-chembioeng-060718-030241.
(6) Luo, W.; Wang, Y.; Cheng, C. Ru-Based Electrocatalysts for Hydrogen Evolution Reaction : Recent Research Advances and Perspectives. Materials Today Physics 2020, 15, 100274. https://doi.org/10.1016/j.mtphys.2020.100274.
(7) Sabatier, P. Hydrogenations et Deshydrogenations Par Catalyse. Berichte der deutschen chemischen Gesellschaft 1911, 44 (3), 1984-2001.
(8) Nørskov, J. K.; Bligaard, T.; Logadottir, A.; Kitchin, J. R.; Chen, J. G.; Pandelov, S.; Stimming, U. Trends in the Exchange Current for Hydrogen Evolution. J Electrochem Soc 2005, 152 (3), J23. https://doi.org/10.1149/1.1856988.
(9) Sheng, W.; Myint, M.; Chen, J. G.; Yan, Y. Correlating the Hydrogen Evolution Reaction Activity in Alkaline Electrolytes with the Hydrogen Binding Energy on Monometallic Surfaces. Energy Environ Sci 2013, 6 (5), 1509. https://doi.org/10.1039/c3ee00045a.
(10) Quaino, P.; Juarez, F.; Santos, E.; Schmickler, W. Volcano Plots in Hydrogen Electrocatalysis-Uses and Abuses. Beilstein Journal of Nanotechnology 2014, 5 (1), 846-854. https://doi.org/10.3762/bjnano.5.96.
(11) Hansen, J. N.; Prats, H.; Toudahl, K. K.; Mørch Secher, N.; Chan, K.; Kibsgaard, J.; Chorkendorff, I. Is There Anything Better than Pt for HER? ACS Energy Lett 2021, 1175-1180. https://doi.org/10.1021/acsenergylett.1c00246.
(12) Bae, S. Y.; Mahmood, J.; Jeon, I. Y.; Baek, J. B. Recent Advances in Ruthenium-Based Electrocatalysts for the Hydrogen Evolution Reaction. Nanoscale Horiz 2020, 5 (1), 43-56. https://doi.org/10.1039/c9nh00485h.
(13) Cao, X.; Huo, J.; Li, L.; Qu, J.; Zhao, Y.; Chen, W.; Liu, C.; Liu, H.; Wang, G. Recent Advances in Engineered Ru-Based Electrocatalysts for the Hydrogen/Oxygen Conversion Reactions. Adv Energy Mater 2022, 12 (41). https://doi.org/10.1002/aenm.202202119.
(14) Yang, Y.; Yu, Y.; Li, J.; Chen, Q.; Du, Y.; Rao, P.; Li, R.; Jia, C.; Kang, Z.; Deng, P.; Shen, Y.; Tian, X. Engineering Ruthenium-Based Electrocatalysts for Effective Hydrogen Evolution Reaction. Nanomicro Lett 2021, 13 (1). https://doi.org/10.1007/s40820-021-00679-3.
(15) Wu, Q.; Luo, M.; Han, J.; Peng, W.; Zhao, Y.; Chen, D.; Peng, M.; Liu, J.; De Groot, F. M. F.; Tan, Y. Identifying Electrocatalytic Sites of the Nanoporous Copper-Ruthenium Alloy for Hydrogen Evolution Reaction in Alkaline Electrolyte. ACS Energy Lett 2020, 5 (1), 192-199. https://doi.org/10.1021/acsenergylett.9b02374.
(16) Wang, H.; Yang, Y.; Disalvo, F. J.; Abrunã, H. D. Multifunctional Electrocatalysts: Ru-M (M = Co, Ni, Fe) for Alkaline Fuel Cells and Electrolyzers. ACS Catal 2020, 10 (8), 4608-4616. https://doi.org/10.1021/acscatal.9b05621.
(17) Zhao, Y.; Wang, X.; Cheng, G.; Luo, W. Phosphorus-Induced Activation of Ruthenium for Boosting Hydrogen Oxidation and Evolution Electrocatalysis. ACS Catal 2020, 10 (20), 11751-11757. https://doi.org/10.1021/ACSCATAL.0C03148/ASSET/IMAGES/LARGE/CS0C03148_000 4.JPEG.
(18) Ye, S.; Luo, F.; Xu, T.; Zhang, P.; Shi, H.; Qin, S.; Wu, J.; He, C.; Ouyang, X.; Zhang, Q.; Liu, J.; Sun, X. Boosting the Alkaline Hydrogen Evolution of Ru Nanoclusters Anchored on B/N-Doped Graphene by Accelerating Water Dissociation. Nano Energy 2020, 68, 104301. https://doi.org/10.1016/J.NANOEN.2019.104301.
(19) Zheng, Y.; Jiao, Y.; Zhu, Y.; Li, L. H.; Han, Y.; Chen, Y.; Jaroniec, M.; Qiao, S. Z. High Electrocatalytic Hydrogen Evolution Activity of an Anomalous Ruthenium Catalyst. J Am Chem Soc 2016, 138 (49), 16174-16181. https://doi.org/10.1021/jacs.6b11291.
(20) Gao, K.; Wang, Y.; Wang, Z.; Zhu, Z.; Wang, J.; Luo, Z.; Zhang, C.; Huang, X.; Zhang, H.; Huang, W. Ru Nanodendrites Composed of Ultrathin Fcc/Hcp Nanoblades for the Hydrogen Evolution Reaction in Alkaline Solutions. Chemical Communications 2018, 54 (36), 4613-4616. https://doi.org/10.1039/C8CC01343H.
(21) Lu, Q.; Wang, A. L.; Gong, Y.; Hao, W.; Cheng, H.; Chen, J.; Li, B.; Yang, N.; Niu, W.; Wang, J.; Yu, Y.; Zhang, X.; Chen, Y.; Fan, Z.; Wu, X. J.; Chen, J.; Luo, J.; Li, S.; Gu, L.; Zhang, H. Crystal Phase-Based Epitaxial Growth of Hybrid Noble Metal Nanostructures on 4H/Fcc Au Nanowires. Nat Chem 2018, 10 (4), 456-461. https://doi.org/10.1038/s41557-018-0012-0.
(22) Wang, Y.; Luo, W.; Li, H.; Cheng, C. Ultrafine Ru Nanoclusters Supported on N/S Doped Macroporous Carbon Spheres for Efficient Hydrogen Evolution Reaction. Nanoscale Adv 2021, 3 (17), 5068-5074. https://doi.org/10.1039/01NA00424G.
(23) Wu, Y.-L.; Li, X.; Wei, Y.-S.; Fu, Z.; Wei, W.; Wu, X.-T.; Zhu, Q.-L.; Xu, Q.; Wu, Y.; Li, X.; Wei, W.; Wu, X.; Zhu, Q.; Wei, Y.; Xu, Q.; Fu, Z. Ordered Macroporous Superstructure of Nitrogen-Doped Nanoporous Carbon Implanted with Ultrafine Ru Nanoclusters for Efficient PH-Universal Hydrogen Evolution Reaction. Advanced Materials 2021, 33 (12), 2006965. https://doi.org/10.1002/ADMA.202006965.
(24) Sun, Y.; Xue, Z.; Liu, Q.; Jia, Y.; Li, Y.; Liu, K.; Lin, Y.; Liu, M.; Li, G.; Su, C. Y. Modulating Electronic Structure of Metal-Organic Frameworks by Introducing Atomically Dispersed Ru for Efficient Hydrogen Evolution. Nature Communications 2021 12:1 2021, 12 (1), 1-8. https://doi.org/10.1038/s41467-021-21595-5.
(25) Peng, J.; Chen, Y.; Wang, K.; Tang, Z.; Chen, S. High-Performance Ru-Based Electrocatalyst Composed of Ru Nanoparticles and Ru Single Atoms for Hydrogen Evolution Reaction in Alkaline Solution. Int J Hydrogen Energy 2020, 45 (38), 18840-18849. https://doi.org/10.1016/j.ijhydene.2020.05.064.
(26) Bele, M.; Stojanovski, K.; Jovanovič, P.; Moriau, L.; Koderman Podboršek, G.; Moškon, J.; Umek, P.; Sluban, M.; Dražič, G.; Hodnik, N.; Gaberšček, M. Towards Stable and Conductive Titanium Oxynitride High-Surface-Area Support for Iridium Nanoparticles as Oxygen Evolution Reaction Electrocatalyst. *ChemCatChem* **2019,** 11 (20), 5038-5044. https://doi.org/10.1002/cctc.201901487.
(27) Loncar, A.; Moriau, L.; Stojanovski, K.; Ruiz-Zepeda, F.; Jovanovic, P.; Bele, M.; Gaberscek, M.; Hodnik, N. Ir/TiON × /C High-Performance Oxygen Evolution Reaction Nanocomposite Electrocatalysts in Acidic Media: Synthesis, Characterization and Electrochemical Benchmarking Protocol. *Journal of Physics: Energy* **2020,** 2 (2), 02LT01. https://doi.org/10.1088/2515-7655/ab69a2.
(28) Lončar, A.; Escalera-López, D.; Ruiz-Zepeda, F.; Hrnjić, A.; Šala, M.; Jovanovič, P.; Bele, M.; Cherevko, S.; Hodnik, N. Sacrificial Cu Layer Mediated the Formation of an Active and Stable Supported Iridium Oxygen Evolution Reaction Electrocatalyst. *ACS Catal* **2021,** 11 (20), 12510-12519. https://doi.org/10.1021/acscatal.1c02968.
(29) Moriau, L.; Koderman Podboršek, G.; Surca, A. K.; Semsari Parpari, S.; Šala, M.; Petek, U.; Bele, M.; Jovanovič, P.; Genorio, B.; Hodnik, N. Enhancing Iridium Nanoparticles' Oxygen Evolution Reaction Activity and Stability by Adjusting the Coverage of Titanium Oxynitride Flakes on Reduced Graphene Oxide Nanoribbons' Support. *Adv Mater Interfaces* **2021,** 8 (17). https://doi.org/10.1002/admi.202100900.
(30) Smiljanić, M.; Panić, S.; Bele, M.; Ruiz-Zepeda, F.; Pavko, L.; Gašparič, L.; Kokalj, A.; Gaberšček, M.; Hodnik, N. Improving the HER Activity and Stability of Pt Nanoparticles by Titanium Oxynitride Support. *ACS* Catal **2022,** 12 (20), 13021-13033. https://doi.org/10.1021/acscatal.2c03214.
(31) Vélez Santa, J. F.; Menart, S.; Bele, M.; Ruiz-Zepeda, F.; Jovanovič, P.; Jovanovski, V.; Šala, M.; Smiljanić, M.; Hodnik, N. High-Surface-Area Organic Matrix Tris(Aza)Pentacene Supported Platinum Nanostructures as Selective Electrocatalyst for Hydrogen Oxidation/Evolution Reaction and Suppressive for Oxygen Reduction Reaction. *Int J Hydrogen Energy* **2021,** 46 (49), 25039-25049. https://doi.org/10.1016/J.IJHYDENE.2021.05.041.
(32) Hrnjić, A.; Ruiz-Zepeda, F.; Gaberšček, M.; Bele, M.; Suhadolnik, L.; Hodnik, N.; Jovanovič, P. Modified Floating Electrode Apparatus for Advanced Characterization of Oxygen Reduction Reaction Electrocatalysts. *J Electrochem Soc* 2020, 167 (16), 166501. https://doi.org/10.1149/1945-7111/abc9de.
(33) Green, C. L.; Kucernak, A. Determination of the Platinum and Ruthenium Surface Areas in Platinum-Ruthenium Electrocatalysts by Underpotential Deposition of Copper. 2: Effect of Surface Composition on Activity. Journal of Physical Chemistry B 2002, 106 (44), 11446-11456. https://doi.org/10.1021/jp020859y.
(34) Mahmood, J.; Li, F.; Jung, S. M.; Okyay, M. S.; Ahmad, I.; Kim, S. J.; Park, N.; Jeong, H. Y.; Baek, J. B. An Efficient and PH-Universal Ruthenium-Based Catalyst for the Hydrogen Evolution Reaction. Nat Nanotechnol 2017, 12 (5), 441-446. https://doi.org/10.1038/nnano.2016.304.
(35) Smiljanić, M.; Panić, S.; Bele, M.; Ruiz-Zepeda, F.; Pavko, L.; Gašparič, L.; Kokalj, A.; Gaberšček, M.; Hodnik, N. Improving the HER Activity and Stability of Pt Nanoparticles by Titanium Oxynitride Support. *ACS Catal* 0 (0), null-null. https://doi.org/10.1021/acscatal.2c03214.
(36) Hartig-Weiss, A.; Tovini, M. F.; Gasteiger, H. A.; El-Sayed, H. A. OEr Catalyst Durability Tests Using the Rotating Disk Electrode Technique: The Reason Why This Leads to Erroneous Conclusions. ACS Appl Energy Mater 2020, 3 (11), 10323-10327. https://doi.org/10.1021/ACSAEM.0C01944/ASSET/IMAGES/LARGE/AE0C01944_0002.J PEG.
(37) Lazaridis, T.; Stühmeier, B. M.; Gasteiger, H. A.; El-Sayed, H. A. Capabilities and Limitations of Rotating Disk Electrodes versus Membrane Electrode Assemblies in the Investigation of Electrocatalysts. Nat Catal 2022, 5 (5), 363-373. https://doi.org/10.1038/s41929-022-00776-5.
(38) Inaba, M.; Jensen, A. W.; Sievers, G. W.; Escudero-Escribano, M.; Zana, A.; Arenz, M. Benchmarking High Surface Area Electrocatalysts in a Gas Diffusion Electrode: Measurement of Oxygen Reduction Activities under Realistic Conditions. Energy Environ Sci 2018, 11 (4), 988-994. https://doi.org/10.1039/c8ee00019k.
(39) Lin, L.; Sun, Z.; Yuan, M.; He, J.; Long, R.; Li, H.; Nan, C.; Sun, G.; Ma, S. Significant Enhancement of the Performance of Hydrogen Evolution Reaction through Shape-Controlled Synthesis of Hierarchical Dendrite-like Platinum. J Mater Chem A Mater 2018, 6 (17), 8068-8077. https://doi.org/10.1039/C8TA00993G.
(40) Cheng, N.; Stambula, S.; Wang, D.; Banis, M. N.; Liu, J.; Riese, A.; Xiao, B.; Li, R.; Sham, T. K.; Liu, L. M.; Botton, G. A.; Sun, X. Platinum Single-Atom and Cluster Catalysis of the Hydrogen Evolution Reaction. Nat Commun 2016, 7, 1-9. https://doi.org/10.1038/ncomms13638.
(41) Yao, H.; Wang, X.; Li, K.; Li, C.; Zhang, C.; Zhou, J.; Cao, Z.; Wang, H.; Gu, M.; Huang, M.; Jiang, H. Strong Electronic Coupling between Ruthenium Single Atoms and Ultrafine Nanoclusters Enables Economical and Effective Hydrogen Production. Appl Catal B 2022, 312. https://doi.org/10.1016/j.apcatb.2022.121378.
(42) Wu, K.; Sun, K.; Liu, S.; Cheong, W. C.; Chen, Z.; Zhang, C.; Pan, Y.; Cheng, Y.; Zhuang, Z.; Wei, X.; Wang, Y.; Zheng, L.; Zhang, Q.; Wang, D.; Peng, Q.; Chen, C.; Li, Y. Atomically Dispersed Ni-Ru-P Interface Sites for High-Efficiency PH-Universal Electrocatalysis of Hydrogen Evolution. Nano Energy 2021, 80. https://doi.org/10.1016/j.nanoen.2020.105467.
(43) Wang, Y.; Zhu, Q.; Xie, T.; Peng, Y.; Liu, S.; Wang, J. Promoted Alkaline Hydrogen Evolution Reaction Performance of Ru/C by Introducing TiO 2 Nanoparticles. ChemElectroChem 2020, 7 (5), 1182-1186. https://doi.org/10.1002/celc.201902170.
(44) Li, D.; Liu, Y.; Liu, Z.; Yang, J.; Hu, C.; Feng, L. Electrochemical Hydrogen Evolution Reaction Efficiently Catalyzed by Ru-N Coupling in Defect-Rich Ru/g-C3N4nanosheets. J Mater Chem A Mater 2021, 9 (26), 15019-15026. https://doi.org/10.1039/dita03809e.
(45) Tang, L.; Yu, J.; Zhang, Y.; Tang, Z.; Qin, Y. Boosting the Hydrogen Evolution Reaction Activity of Ru in Alkaline and Neutral Media by Accelerating Water Dissociation. RSC Adv 2021, 11 (11), 6107-6113. https://doi.org/10.1039/D0RA09515J.
(46) Liu, Z.; Yang, X.; Hu, G.; Feng, L. Ru Nanoclusters Coupled on Co/N-Doped Carbon Nanotubes Efficiently Catalyzed the Hydrogen Evolution Reaction. ACS Sustain Chem Eng 2020, 8 (24), 9136-9144. https://doi.org/10.1021/acssuschemeng.0c02636.
(47) Luo, Y.; Luo, X.; Wu, G.; Li, Z.; Wang, G.; Jiang, B.; Hu, Y.; Chao, T.; Ju, H.; Zhu, J.; Zhuang, Z.; Wu, Y.; Hong, X.; Li, Y. Mesoporous Pd@Ru Core-Shell Nanorods for Hydrogen Evolution Reaction in Alkaline Solution. ACS Appl Mater Interfaces 2018, 10 (40), 34147-34152. https://doi.org/10.1021/acsami.8b09988.
(48) Bele, M.; Jovanovič, P.; Marinko, Ž.; Drev, S.; Selih, V. S.; Kovač, J.; Gaberšček, M.; Koderman Podboršek, G.; Dražić, G.; Hodnik, N.; Kokalj, A.; Suhadolnik, L. Increasing the Oxygen-Evolution Reaction Performance of Nanotubular Titanium Oxynitride-Supported Ir Nanoparticles by a Strong Metal-Support Interaction. *ACS* Catal **2020,** 10 (22), 13688-13700. https://doi.org/10.1021/acscatal.0c03688.
(49) Kim, M, Park, J-N, Kim H, Song, SI, Lee, W-H; The preparation of Pt/C catalysts using various carbon materials for the cathode of PEMFC, Journal of Power Sources 2006, 163 (1), 93-97. https://doi.org/10.1016/j.jpowsour.2006.05.057.

## Claims

1. A catalyst for hydrogen evolution, comprising Ru nanoparticles supported on titanium oxynitride (TiON), wherein the amount of Ru loading is at least 3 wt.% based on the total weight of the catalyst.

2. The catalyst of claim 1, wherein TiON is dispersed over a high specific surface carbon (HSSAC) material, in particular reduced graphene oxide or carbon black with a high specific surface area, wherein the HSSAC material has a high specific surface area of at least 250m²/g, preferably 250-1500 m²/g as determined by BET testing.

3. The catalyst of claim 1 or 3, wherein the amount of Ru loading is 3 to 50 wt.%, preferably in a range of 3 to 20 wt.%, more preferably 5 to 10 wt.%, in particular 6 wt. % or less, based on the total weight of the catalyst, and wherein the catalyst is preferably free of Cu.

4. The catalyst of any one of claims 1-3, wherein the particle size of the supported Ru nanoparticles is 1-50 nm, preferably in a range of 1-10 nm, more preferably 2-5 nm, in particular the average particle diameter is about 2-3 nm, as determined by transmission electron microscopy (TEM).

5. The catalyst of any one of claims 1-4, wherein the supported Ru nanoparticles display an hcp structure and/or a distorted cubic (fcc) structure.

6. The catalyst of any one of claims 1-5, further comprising Ir and/or Pt on the TiON-supported Ru nanoparticles, wherein the amount of Ir and/or Pt loading is preferably in a range of 0.5 to 15 wt.%, more preferably 1 to 10 wt.%, and/ or wherein the mass ratio of Ru : Ir and/or Ru : Pt is preferably in a range of 10:1 to 1:10, more preferably 2:1 to 1:2.

7. A catalyst ink comprising the catalyst of any one of claims 1-6.

8. The catalyst ink of claim 7, wherein the catalyst in powder form is dispersed in water.

9. A method for preparing the catalyst of any one of claims 2-6, comprising the steps
(i) synthesizing HSSAC, in particular graphene oxide,
(ii) overlaying the HSSAC, in particular graphene oxide, with TiO₂,
(iii) adding a Ru precursor to the mixture resulting from (ii), and
(iv) thermally treating the mixture resulting from (iii) in an ammonia atmosphere to yield Ru/TiON-C.

10. The method of claim 9, further comprising a step of adding an Ir precursor or a Pt precursor to the Ru/TiON-C and heating to yield Ru/TiON-C loaded with Ir or Pt.

11. The method of claim 9 or 10, further comprising a step of coating the Ru/TiON-C or the Ru/TiON-C loaded with Ir and/or Pt onto an electrode.

12. An electrochemical cell, comprising
an electrode coated with the catalyst of any one of claims 1-6 or the catalyst ink of claim 7 or 8, a counter electrode, and an electrolyte.

13. The electrochemical cell of claim 12, wherein the electrolyte is an alkaline aqueous solution.

14. The electrochemical cell of claim 12 or 13, wherein the electrode coated with the catalyst is a cathode.

15. A method for producing hydrogen by electrochemical hydrogen evolution reaction (HER), comprising water electrolysis in alkaline media, wherein water is reduced at a cathode surface comprising a catalyst according to any one of claims 1-6.
